# EUROPÄISCHE PATENTSCHRIFT

(11) **EP 3 017 207 B1**
(45) Veröffentlichungstag und Bekanntmachung des Hinweises auf die Patenterteilung: **09.12.2020**
(21) Anmeldenummer: 14738409.3
(22) Anmeldetag: 18.06.2014
(51) Int. Cl.: F16D 3/20

(54) **GELENKINNENTEIL SOWIE ROLLENKÖRPER EINES TRIPODE-GLEICHLAUFGELENKS**
INNER JOINT PART AND ROLLER ELEMENT OF A TRIPOD CONSTANT VELOCITY JOINT
ÉLÉMENT INTÉRIEUR ET GALET DE JOINT HOMOCINÉTIQUE DE TYPE TRIPODE

(30) Priorität: 01.07.2013 DE 102013106868
(43) Veröffentlichungstag der Anmeldung: 11.05.2016
(73) Patentinhaber: GKN Driveline International GmbH, 53797 Lohmar (DE)
(72) Erfinder: BEIGANG, Wolfgang, 53819 Neunkirchen-Seelscheid (DE); BROCHHEUSER, Ulrich, 53819 Neunkirchen (DE); ERYILMAZ, Orkan, 53797 Lohmar (DE)
(74) Vertreter: Rössler, Matthias
(86) Internationale Anmeldenummer: PCT/EP2014/062897
(87) Internationale Veröffentlichungsnummer: WO 2015/000709

(56) Entgegenhaltungen:
- EP-A2- 1 503 097
- EP-A2- 1 707 834
- DE-A1-102007 057 538
- US-A1- 2011 053 695

## Beschreibung

Die vorliegende Erfindung ist auf ein Gelenkinnenteil eines Tripode-Gleichlaufgelenks sowie auf einen (angepassten) Rollenkörper zur Anordnung auf einem Zapfen eines Gelenkinnenteils eines Tripode-Gleichlaufgelenks gerichtet. Tripode-Gleichlaufgelenke werden insbesondere zur Übertragung von Drehmomenten mittels Wellen eingesetzt, wenn eine axiale Verschiebung und (gleichzeitig) eine Abbeugung der Wellen zueinander ermöglicht sein sollen.

Ein derartiges Tripode-Gelenk ist bspw. aus der EP 1 008 777 A2 oder aus der EP 1 707 834 A2 bekannt. Dort wird unter anderem ein Zapfen offenbart, der eine ballige Umfangsfläche mit einer aus mehreren Teilabschnitten zusammengesetzten Mantellinie hat, wobei die Mantellinie im Bereich des größten Durchmessers des Zapfens einen größeren Radius aufweist als in den benachbarten Abschnitten der Mantellinie. Die Mantellinie ist dabei über den Umfang der balligen Umfangsfläche gleichbleibend ausgeführt, das heißt, die ballige Umfangsfläche ist rotationssymmetrisch zur Längsachse des jeweiligen Zapfens ausgeführt. Der Zapfen dieses Tripode-Gleichlaufgelenks weicht damit von der sonst bekannten kugeligen Form ab.

Aus der EP 1 503 097 A2 ist ein Rollenkörper für ein Tripode-Gleichlaufgelenk bekannt, der an einer Innenumfangsfläche, die den Zapfen kontaktiert, einen konvex geformten mittleren Bereich aufweist. Im Anschluss an diesen mittleren Bereich sind jeweils Entlastungsbereiche vorgesehen, die z. B.durch eine Gerade gebildet werden. Diese Entlastungsbereiche sollen einen Kontakt des Rollenkörpers mit dem Zapfen bei Abbeugung des Gelenks verhindern.

Hiervon ausgehend ist es Aufgabe der vorliegenden Erfindung, die im Zusammenhang mit dem Stand der Technik geschilderten Probleme wenigstens teilweise zu lösen. Es soll insbesondere ein leichtes und kostengünstiges Tripode-Gleichlaufgelenk bereitgestellt werden, das zudem eine sehr gute Belastbarkeit aufweist. Weiterhin soll es auch für größere Beugewinkel einsetzbar sein. Für ein derartiges Tripode-Gleichlaufgelenk werden ein Gelenkinnenteil und ein Rollenkörper vorgeschlagen.

Dies wird erreicht durch ein Gelenkinnenteil eines Tripode-Gleichlaufgelenkes gemäß den Merkmalen des Patentanspruchs 1. Dies wird weiterhin durch einen Rollenkörper für ein (erfindungsgemäßes) Gelenkinnenteil gemäß Patentanspruch 9 erreicht. Weitere vorteilhafte Ausgestaltungen der Erfindung und übergeordnete Baugruppen sind in den abhängigen Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Hierfür wird ein Gelenkinnenteil eines Tripode-Gleichlaufgelenks vorgeschlagen, umfassend eine Nabe mit einer Drehachse und drei Zapfen, die sich von der Nabe in einer radialen Richtung nach außen erstrecken und einen an der Nabe sich anschließenden Übergangsbereich sowie einen Lagerbereich aufweisen. Jeder Zapfen weist eine Längsachse und im Lagerbereich eine ballige Umfangsfläche auf. Das Gelenkinnenteil hat eine erste Ebene, die alle Längsachsen der Zapfen umfasst und senkrecht zur Drehachse aufgespannt ist. Die ballige Umfangsfläche jedes Zapfens bildet eine in der ersten Ebene verlaufende erste Mantellinie, wobei auf einer Höhe entlang der Längsachse, an der ein größter Durchmesser des Zapfens vorliegt, eine Inkugel mit einem Inkugel-Radius vorgegeben ist, deren Mittelpunkt auf der Längsachse an der Stelle der Höhe liegt und die die gegenüberliegende Kontaktpunkte der ersten Mantellinie kontaktiert. Die erste Mantellinie jedes Zapfens verläuft zumindest in, an dem jeweiligen Kontaktpunkt jeweils angrenzenden, ersten Winkelbereichen außerhalb der Inkugel, wobei der erste Winkelbereich von dem Mittelpunkt der Inkugel ausgeht und sich über jeweils maximal 20 Winkelgrad, insbesondere jeweils maximal 10 Winkelgrad, beidseitig des jeweiligen Kontaktpunkts erstreckt. Eine zweite Mantellinie der balligen Umfangsfläche jedes Zapfens liegt in einer zweiten Ebene vor, wobei die zweite Ebene senkrecht zur ersten Ebene angeordnet ist und die Längsachse des jeweiligen Zapfens enthält. Weiter berührt die zweite Mantellinie die Inkugel nur auf der Höhe des größten Durchmessers des Zapfens in den Berührungspunkten und verläuft zumindest in, an dem jeweiligen Berührungspunkt jeweils angrenzenden, zweiten Winkelbereichen innerhalb der Inkugel, wobei der zweite Winkelbereich von dem Mittelpunkt der Inkugel ausgeht und sich über jeweils maximal 30 Winkelgrad, insbesondere jeweils maximal 20 Winkelgrad, beidseitig des jeweiligen Berührungspunkts erstreckt.

Der prinzipielle Aufbau eines Gelenkinnenteils eines Tripode-Gleichlaufgelenks kann als bekannt vorausgesetzt werden, wobei die Nabe insbesondere eine (um die Drehachse rotierende) Welle aufnehmen und damit ein eingeleitetes Drehmoment über die Zapfen auf ein Gelenkaußenteil übertragen kann bzw. umgekehrt. Die Zapfen weisen für den Fachmann ohne Weiteres erkennbare Funktionsbereiche auf, wobei hier regelmäßig ein sich von der Nabe aus in radialer Richtung erstreckender Übergangsbereich vorgesehen ist, bevor sich weiter außen ein Lagerbereich anschließt, dessen ballige Umfangsfläche die Gleitkontaktfläche für den darauf zu montierenden Rollenkörper darstellt. Die Umfangsfläche ist ballig ausgeführt, wobei die Umfangsfläche zumeist nicht sphärisch geformt ist. Einen radialen Abschluss des Zapfens kann eine Stirnfläche bilden, die insbesondere dadurch gekennzeichnet ist, dass diese senkrecht zur Längsachse ausgeformt ist oder der vektorielle Krümmungsradius der Stirnfläche in einem Kegel mit einem Öffnungswinkel von 30 bis 60 Winkelgrad um die Längsachse angeordnet ist.

Die Längsachsen der Zapfen liegen in einer gemeinsamen Ebene, die senkrecht zur Drehachse des Gelenkinnenteils positioniert ist und hier als "erste Ebene" bezeichnet wird. Betrachtet man nun einen Schnitt durch den Zapfen in der ersten Ebene, so bildet die Kontur der Umfangsfläche eine "erste Mantellinie" (Mantellinie des Zapfens in der ersten Ebene) aus. Diese erste Mantellinie in dem Lagebereich ist funktional wichtig, weil über diese eine Kraftübertragung in Umfangsrichtung des Gelenkinnenteils erfolgt. Daher wird diese Mantellinie auch für die Definition einer Inkugel mit einem eindeutig bestimmten Inkugel-Radius herangezogen. Dazu ist zunächst im Lagerbereich die Höhe des Zapfens mit dem (betragsmäßig) größten Durchmesser senkrecht zur Längsachse zu identifizieren. Dabei ist die größte Höhe anzunehmen, d. h. für den in radialer Richtung am weitesten außen liegenden größten Durchmesser des Zapfens. Die den größten Durchmesser an dieser Höhe definierenden Punkte der gegenüberliegenden Abschnitte der ersten Mantellinie sind demnach Kontaktpunkte der (gedachten bzw. mathematischen) Inkugel, wobei dann der Mittelpunkt der Inkugel auf der Längsachse positioniert ist und der Inkugel-Radius der Hälfte des größten Durchmessers des Zapfens an der Höhe der Längsachse entspricht. Die hier zur Beschreibung der Kontur des Zapfens angeführte Inkugel dient dem Vergleich mit einer kugeligen Form des Zapfens, von der die hier vorgeschlagene Ausführung entsprechend abweicht.

Der größte Durchmesser in der ersten Ebene kann um ein geringes Maß (im Bereich von 0,01 bis 0,1 Millimeter) von dem größten Durchmesser des Zapfens in der zweiten Ebene abweichen, so dass ein Querschnitt durch den Zapfen in einer dritten Ebene, wobei die dritte Ebene sowohl zur Längsachse des jeweiligen Zapfens als auch zu der ersten Ebene senkrecht ausgerichtet ist, leicht elliptisch ausgeformt ist.

Im Vergleich des Verlaufs der Kontur der Inkugel in der ersten Ebene und der ersten Mantellinie benachbart zu diesen Kontaktpunkten ergibt sich hier, dass die erste Mantellinie weniger stark gekrümmt ist bzw. außerhalb (mit einer größeren Distanz zur Längsachse) der Inkugel verläuft. Diese Bestimmung sollte für entsprechende erste Winkelbereiche (Winkelbereiche betreffend die erste Mantellinie) vorliegen, wobei die Beträge der ersten Winkelbereiche auch verschieden sein können, insbesondere im Hinblick auf die Ausgestaltung unterhalb und oberhalb der Höhe mit dem größten Durchmesser in Richtung der Längsachse (in radialer Richtung). So kann der erste Winkelbereich unterhalb der Höhe größer, gleichgroß oder kleiner als der erste Winkelbereich oberhalb der Höhe ausgeführt sein. Im Fall, dass beide ersten Winkelbereiche maximal sind, erfassen beide je 20 Winkelgrad, so dass insgesamt 40 Winkelgrad umfasst sind. Falls ein erster Winkelbereich minimal ist und ein anderer maximal, dann erstreckt sich ein erster Winkelbereich (oberhalb oder unterhalb des einen Kontaktpunkts) nur über 20 Winkelgrad, während hin zur anderen Seite (dementsprechend unterhalb oder oberhalb desselben Kontaktpunkts) die obige Bedingung nicht erfüllt sein muss. Klar ist jedoch, dass wenigstens einseitig die erste Mantellinie weiter außen liegen soll, insbesondere über einen (minimalen) ersten Winkelbereich von 2 Winkelgrad beidseits des Kontaktpunktes, insbesondere mindestens 5 Winkelgrad insgesamt.

Der Verlauf der ersten Mantellinie weicht also von einer kugeligen Form ab und erstreckt sich insbesondere in der ersten Ebene flacher als der Verlauf des Schnittkreises der Inkugel in der ersten Ebene. In dieser ersten Ebene werden die Umfangskräfte zwischen Gelenkinnenteil und Gelenkaußenteil eines Tripode-Gleichlaufgelenks hauptsächlich übertragen. Infolge der flacher verlaufenden ersten Mantellinie wird nun die Schmiegung zwischen der Zapfenoberfläche im Lagerbereich und der Innenumfangsfläche eines Rollenkörpers enger. Somit kann infolge der flacher verlaufenden ersten Mantellinie die Hertz'sche Pressung in der Hauptkraftrichtung des Tripode-Gleichlaufgelenks (in der ersten Ebene) deutlich reduziert werden. Somit lassen sich mit diesem Tripode-Gleichlaufgelenk höhere Kräfte übertragen, so dass die Zapfen zudem mit einem größten Durchmesser ausgeführt werden können, der betragsmäßig signifikant kleiner ist, als das bei bekannten Tripode- Gleichlaufgelenken der Fall ist. Dadurch können auch kleinere Rollenkörper verwendet werden, so dass letztlich auch eine Reduzierung der Außenabmessung eines Gelenkaußenteils erreicht werden kann. Infolge der engeren Schmiegung zwischen Rollenkörper und Zapfen werden auch die NVH-Eigenschaften des Gleichlaufgelenks ("noise, vibration, harshness") verbessert, insbesondere bei Beugewinkeln von Gelenkinnenteil gegenüber Gelenkaußenteil von mehr als 16 Winkelgrad. Gerade bei diesen großen Beugewinkeln tritt bei bekannten Gelenken im Betrieb das sogenannte "shudder" oder "Anfahrschütteln" auf, dass durch die zyklische Axialkraft 3. Ordnung beschreibbar ist.

In einem Schnitt durch die Längsachse eines/ jeden einzelnen Zapfens um 90 Winkelgrad versetzt zur ersten Ebene wird eine entsprechende Kontur der balligen Umfangsfläche erkennbar, die hier mit "zweiter Mantellinie" bezeichnet ist (Mantellinie in der zweiten Ebene). Hierbei wird nun der Verlauf wieder mit derselben Inkugel verglichen, also mit der Schnittlinie der Inkugel mit der zweiten Ebene (insbesondere auf derselben Höhe der Längsachse). Dabei berührt die Inkugel auch die zweite Mantellinie in zwei bezüglich der Längsachse gegenüberliegenden Punkten, die hier als Berührungspunkte bezeichnet sind. Damit liegen (nur) die Berührungspunkte der zweiten Mantellinie und die Kontaktpunkte der ersten Mantellinie auf einem gemeinsamen Kreis der Inkugel. Im Vergleich des Verlaufs der Kontur der Inkugel in der zweiten Ebene und der zweiten Mantellinie benachbart zu diesen Berührungspunkten ergibt sich, dass die zweite Mantellinie stärker gekrümmt ist bzw. innerhalb (mit einer kleineren Distanz zur Längsachse) der Inkugel verläuft. Diese Bestimmung sollte für entsprechende zweite Winkelbereiche (Winkelbereiche betreffend die zweite Mantellinie) vorliegen, wobei die Beträge der zweiten Winkelbereiche auch verschieden sein können, insbesondere im Hinblick auf die Ausgestaltung unterhalb und oberhalb der Höhe mit dem größten Durchmesser in Richtung der Längsachse. Insoweit wird auf die entsprechenden Erläuterungen zum ersten Winkelbereich verwiesen, die hier gleichermaßen für den zweiten Winkelbereich gelten sollen.

Der Verlauf der zweiten Mantellinie in der zweiten Ebene, die also nun innerhalb der Inkugel verläuft, ermöglicht es insbesondere, ein geringes Spiel zwischen Rollenkörper und Zapfen einzustellen, so dass bei einem Abbeugen des Gelenks das Zentrum des Rollenkörpers in der zweiten Ebene gegenüber dem Zapfen verschiebbar ist. Infolge dieser möglichen Verschiebung kann verhindert werden, dass bei einem Abbeugen des Gelenks und einer Kippbewegung des Rollenkörpers gegenüber dem Zapfen ein Klemmen zwischen Zapfen und Rollenkörper im Bereich der ersten Mantellinie auftritt. Diese mögliche Klemmung resultiert aus dem Verlauf der ersten Mantellinie, der hier durch den großen ersten Krümmungsradius (bzw. durch eine Gerade) gebildet wird. Entsprechend können an einer Seite des Zapfens im Bereich der ersten Mantellinie mehrere Kontaktpunkte mit der Innenumfangsfläche des Rollenkörpers ausgebildet werden, so dass ein Klemmen möglich wäre. Der Verlauf der zweiten Mantellinie stellt nun sicher, dass eine Verschiebung zwischen Zapfen und Rollenkörper möglich ist, so dass ein Klemmen sicher verhindert wird.

Insbesondere wird durch den Verlauf der zweiten Mantellinie nun ermöglicht, dass bei Abbeugung des Gelenks ein Kontakt zwischen zweiter Mantellinie des Zapfens und Rollenkörper nur auf einer Seite des Zapfens auftritt. Dies ist insbesondere darauf zurückzuführen, dass der Zapfenradius in diesem Kontaktbereich mit dem Rollenkörper kleiner ist als der Inkugelradius. Somit kann sich die Mitte des Rollenkörpers (das Zentrum des Rollenkörpers) bei großen Beugewinkeln relativ zum Mittelpunkt des Zapfens und entlang der zweiten Ebene verschieben. Hierdurch kann das Spiel zwischen Rollenkörper und Zapfen (im Bereich der ersten Mantellinie) minimiert werden, ohne dass bei großen Beugewinkeln Verklemmen auftritt.

Insbesondere verläuft der Übergang zwischen zweiter Mantellinie und erster Mantellinie in Umfangsrichtung um die Längsachse eines jeden Zapfens kontinuierlich. Kontinuierlich bedeutet hier, dass keine sprunghaften Änderungen in der Kontur der Mantellinien bzw. an der Umfangsfläche vorgesehen sind.

Insbesondere weist der Zapfen also keine um die Längsachse rotationssymmetrische Umfangsfläche auf. Der Verlauf der ersten Mantellinien in der ersten Ebene (Hauptkraftrichtung) unterscheidet sich von dem Verlauf der zweiten Mantellinien in der zweiten Ebene, insbesondere benachbart zu den Kontaktpunkten bzw. den Berührungspunkten mit der Inkugel. Die ersten Mantellinien und die zweiten Mantellinien sind jeweils an die unterschiedlichen Beanspruchungen im Betrieb angepasst. Umfangskräfte werden im Betrieb zum größten Teil über die Bereiche der Umfangsfläche des Zapfens übertragen, die im Bereich der ersten Ebene angeordnet sind. Über die in der zweiten Ebene angeordneten Bereiche der Umfangsfläche des Zapfens werden die (deutlich geringeren) Kräfte übertragen, die in axialer Richtung des Gleichlaufgelenkes wirken. Durch diese axial wirkenden Kräfte wird das Gelenkinnenteil gegenüber dem Gelenkaußenteil in der axialen Richtung verschoben.

Insbesondere weist die erste Mantellinie im Lagerbereich einen ersten Krümmungsradius auf, der zumindest an dem Kontaktpunkt maximal ist. Durch diesen (betragsmäßig) maximalen ersten Krümmungsradius wird nun der (abweichende) Verlauf der ersten Mantellinie gegenüber der Inkugel beschrieben. Die Inkugel weist den größten Durchmesser des Zapfens bzw. einen Inkugel-Radius auf, der (deutlich) kleiner ist als der erste Krümmungsradius der ersten Mantellinie. Dies gilt insbesondere zumindest für den ersten Winkelbereich benachbart zu dem Kontaktpunkt und/oder den Kontaktpunkt selbst.

Insbesondere beträgt ein Verhältnis (V1) des Betrags des ersten Krümmungsradius (eKRmax) im Kontaktpunkt zu dem Betrag des Inkugel-Radius (IKR) mindestens 50 (V1 = eKRmax/IKR ≥ 50). Bevorzugt liegt das Verhältnis in einem Bereich von 100 bis 1.000 (100 ≤ V1 ≤ 1.000). In diesem Fall wird die oben bereits erläuterte Schmiegung besonders gut erreicht.

Eine Vergrößerung des ersten Krümmungsradius verringert entsprechend die Kontaktpressung zwischen Rollenkörper und Zapfen (gute Schmiegung). Dabei erlauben Werte in einem Bereich von 50 bis 1000 einen guten Kompromiss zwischen notwendigem Spiel ohne Klemmen und der sich ergebenden geringeren Kontaktpressung (Hertz'sche Pressung).

Gemäß einer besonders vorteilhaften Ausgestaltung ist die erste Mantellinie jedes Zapfens an den Kontaktpunkten sowie in jeweils angrenzenden ersten Winkelbereichen als Gerade ausgeführt, wobei der erste Winkelbereich von dem Mittelpunkt der Inkugel ausgeht und sich zumindest einseitig über 2 bis 20 Winkelgrad benachbart des Kontaktpunkts erstreckt.

Insbesondere erstreckt sich die erste Mantellinie also nach Art eines Geradenabschnitts (erster Krümmungsradius ist unendlich groß) über einen Abschnitt, der innerhalb des ersten Winkelbereichs liegt, wobei der Geradenabschnitt nicht zwingend beidseitig des Kontaktpunkts und/oder gleichermaßen beidseitig des Kontaktpunkts ausgebildet sein muss. Vielmehr reicht es aus, dass ein Abschnitt von 2 bis 20 Winkelgrad erfasst sind, wobei ganz besonders bevorzugt sich der Geradenabschnitt über 5 bis 20 (ganz besonders bevorzugt 5 bis 10) Winkelgrad und über den Kontaktpunkt hinweg erstreckt. Bevorzugt ist weiter, dass der Geradenabschnitt bzw. erste Winkelbereich hier (überwiegend oder sogar nur) oberhalb des Kontaktpunkts (also hin zur Stirnfläche des Zapfens) ausgebildet ist. Insbesondere ist es möglich, dass die erste Mantellinie außerhalb des ersten Winkelbereichs die Inkugel schneidet und dann innerhalb der Inkugel verläuft.

Insbesondere wird die Umfangsfläche jedes Zapfens in der dritten Ebene im Bereich der ersten Mantellinie durch den ersten Krümmungsradius gebildet. Weiter wird die Umfangsfläche jedes Zapfens in der dritten Ebene und in einem vierten Winkelbereich zwischen der ersten Ebene und der jeweiligen zweiten Ebene des Zapfens durch einen zweiten Krümmungsradius gebildet, der sich kontinuierlich ändert.

Gemäß einer weiteren besonders vorteilhaften Ausgestaltung bildet jeder Zapfen in dem Übergangsbereich einen Übergangsradius aus, dessen Betrag in einer Umfangsrichtung um die Längsachse des Zapfens variiert, wobei die Beträge des Übergangsradius in der ersten Ebene maximal und in Umfangsrichtung um 90 Winkelgrad versetzt dazu minimal sind. Der Übergangsbereich ist regelmäßig gegenüber dem Lagerbereich verjüngt ausgebildet, wobei hier vorgegeben wird, in welchen Bereichen des Übergangsbereichs mehr bzw. weniger Material entfernt werden kann, so dass ein besseres Ergebnis hinsichtlich einer Gewichtseinsparung bei gleichzeitig hoher Lastübertragung und Dauerhaltbarkeit ermöglicht ist. Insbesondere verändert sich der Übergangsradius zwischen dem größtem Betrag und dem kleinsten Betrag kontinuierlich, das heißt es sind keine unstetigen Übergänge in Umfangsrichtung vorgesehen. Durch diese Ausgestaltung des Übergangsradius über den Umfang des Zapfens, insbesondere mit dem minimalen Wert in der zweiten Ebene jedes Zapfens, kann ein Freistich und/oder eine Aussparung im Zapfen geschaffen werden, in die ein Teil des Rollenkörpers bei einer Abbeugung des Tripode-Gleichlaufgelenks auch eintauchen kann, so dass eine Kollision zwischen Rollenkörper und Gelenkinnenteil auch bei großen Beugewinkeln vermieden werden kann. Hierdurch können also auch größere Beugewinkel von Gelenkinnenteil gegenüber Gelenkaußenteil ermöglicht werden, ohne dass der Außendurchmesser des Tripodegelenks vergrößert werden muss (also der Außendurchmesser des Gelenkaußenteils).

Insbesondere erlauben die beschriebenen Aussparungen, dass der Außendurchmesser eines Tripodegelenks bei vergleichbarer Funktion um bis zu 5 % verringert werden kann.

Gegebenenfalls wird der Verlauf dieses Übergangs in der zweiten Ebene jedes Zapfens durch den Übergangsradius nur näherungsweise beschrieben. Die Kontur des Zapfens in diesem Übergangsbereich kann ggf. eckig verlaufen und/oder mehrere unterschiedliche Radien aufweisen. Dabei kann der Fachmann problemlos diese Lehre hier entsprechend anwenden.

Insbesondere liegt ein Verhältnis (V2) des maximalen Betrags des Übergangsradius (URmax) zu dem minimalen Betrag des Übergangsradius (URmin) in einem Bereich von 5 bis 10 (V2 = URmax/URmin; 5 ≤ V2 ≤ 10). Insbesondere liegt dieses Verhältnis in einem Bereich von 8 bis 10 (8 ≤ V2 ≤ 10).

Insbesondere ist an der Stelle, wo die höchste Biegespannung auftritt, der größtmögliche Übergangsradius anzuordnen. Ein größerer Übergangsradius minimiert die Kerbspannungen. Die Obergrenze ergibt sich aus der Optimierung von Baugröße, maximalem Beugewinkel des Gelenks und der Festigkeit des Rollenkörpers.

Insbesondere wird zur Realisierung einer minimalen Höhe des Übergangsbereichs und damit eines maximalen Funktionsbereichs am Zapfen für die Abwinklung des Rollenkörpers der kleinste Übergangsradius orthogonal zum Bereich der Krafteinleitung angeordnet, das heißt hier, im Bereich der zweiten Ebene.

Es wird weiter vorgeschlagen, dass die erste Mantellinie jedes Zapfens in einem Bereich zwischen dem Kontaktpunkt und der Nabe einen Abstand von der Längsachse des Zapfens aufweist, der zumindest dem Inkugel-Radius entspricht. Mit anderen Worten heißt das insbesondere, dass die erste Mantellinie des Zapfens in einem Bereich zwischen dem Kontaktpunkt und der Nabe (insbesondere zumindest teilweise (nur) im Übergangsbereich) einen Abstand von der Längsachse des Zapfens aufweist, der im Wesentlichen dem Inkreis-Radius entspricht. Insbesondere setzt sich also die erste Mantellinie, ausgehend von dem Kontaktpunkt und hin zu der Nabe, in Form einer Gerade fort, die parallel zur Längsachse des Zapfens verläuft.

Gemäß einem weiteren Aspekt der Erfindung wird ein Rollenkörper eines Tripode-Gleichlaufgelenkes vorgeschlagen, der gegebenenfalls auch mit dem hier erläuterten Gelenkinnenteil kombinierbar ist.

Der Rollenkörper eines Tripode-Gleichlaufgelenkes hat ein Zentrum, sowie eine Außenumfangsfläche und eine konvex geformte Innenumfangsfläche, die rotationssymmetrisch um eine Mittelachse ausgebildet sind. Weiter liegt eine Mittelebene vor, die eine Mittelachse des Rollenkörpers erfasst und eine Verlaufslinie der konvexen Innenumfangsfläche definiert. Die Verlaufslinie bildet einen Verlaufslinienradius aus, dessen Betrag in einen Zentralbereich um eine Zentralebene, die durch das Zentrum und senkrecht zur Mittelebene angeordnet ist, maximal ist, wobei der Betrag des Verlaufslinienradius in einem angrenzenden Bereich kleiner ist.

Der prinzipielle Aufbau solcher Rollenkörper ist dem Fachmann bekannt. Regelmäßig umfasst ein solcher Rollenkörper einen Innenlagerring und einen Außenlagerring, wobei dann nadelförmige Wälzkörper dazwischen angeordnet sind. Dabei werden die konvex geformte Innenumfangsfläche regelmäßig mit dem Innenlagerring und die Außenumfangsfläche mit dem Außenlagerring gebildet. Der Innenlagerring hat eine Öffnung, die so gestaltet ist, dass der Rollenkörper auf den Zapfen des zugehörigen Tripode-Gleichlaufgelenks gesteckt werden und mit der dort vorgesehenen Lagerfläche interagieren kann. Dabei stellt die Mittelachse regelmäßig die Rotationsachse für den Rollenkörper dar, auf der also auch das Zentrum liegt. Durch das Zentrum verläuft eine Zentralebene, die den Rollenkörper mittig und senkrecht zu einer Mittelebene (die die Mittelachse einschließt) schneidet.

Die Innenumfangsfläche bzw. die Verlaufslinie setzt sich außerhalb dieses konvexen Abschnitts mit einem konkaven oder geraden Abschnitt (oder einer Kombination daraus) fort.

Im Betrieb des Tripode-Gleichlaufgelenkes können insbesondere beide Bereiche der konvex geformten Innenumfangsfläche (also der Zentralbereich und der angrenzende Bereich mit kleinerem Verlaufslinienradius) in Kontakt mit der Umfangsfläche des Zapfens kommen. Die Form der Innenumfangsfläche des Rollenkörpers erlaubt insbesondere, dass die bei kleinen Beugewinkeln im Allgemeinen häufig auftretenden hohen Lasten über den Zentralbereich mit einer guten Schmiegung übertragen werden. Die bei höheren Beugewinkeln üblicherweise auftretenden geringen Lasten können über eine geringfügig schlechtere Schmiegung im angrenzenden Bereich übertragen werden. Durch diese spezielle Form der konvexen Innenumfangsfläche ist es nun insbesondere möglich, die Schmiegung zwischen Rollenkörper und Zapfen der jeweilige Lastsituation anzpasssen und gleichzeitig ein geringes Spiel zwischen Rollenkörper und Zapfen zu realisieren, so dass die Gefahr eines Verklemmen des Rollenkörpers auf dem Zapfen nicht besteht.

Insbesondere beträgt ein Verhältnis (V3) des maximalen Betrags des Verlaufslinienradius (VLRmax) zu dem kleineren Betrag des Verlaufslinienradius (VLRred) mindestens 2 (V3 = VLRmax/VLRred; V3 ≥ 2). Ganz besonders bevorzugt liegt das Verhältnis in einem Bereich von 3 bis 6 (3 ≤ V3 ≤ 6).

Es hat sich dabei gezeigt, dass sich innerhalb dieser Grenzen ein guter Kompromiss zwischen Kontaktpressung, Spiel und Abbeugbarkeit des Rollenkörpers auf dem Zapfen ergibt.

Gemäß einer weiteren vorteilhaften Ausgestaltung umfasst der Zentralbereich einen dritten Winkelbereich, der sich ausgehend vom Zentrum und über die Zentralebene hinaus beidseitig über minimal 1 Winkelgrad und maximal 6 Winkelgrad erstreckt. Ganz besonderes bevorzugte Grenzen des dritten Winkelbereichs sind: +/- 1,5 Winkelgrad bis +/- 2,5 Winkelgrad (also symmetrisch oberhalb und unterhalb der Zentralebene). Insgesamt sollte der dritte Winkelbereich also bevorzugt 2 bis 12 Winkelgrad umfassen, insbesondere 3 bis 5 Winkelgrad. Insbesondere erstreckt sich die Verlaufslinie der Innenumfangsfläche, die jeweils mit den kleineren Verlaufsradius gebildet ist, über jeweils einen (weiteren) Winkelbereich, ausgehend vom Zentrum und beidseitig (also symmetrisch oberhalb und unterhalb der Zentralebene) jeweils anschließend an den dritten Winkelbereich, von +/- 1 bis +/- 6 Winkelgrad, insbesondere von +/- 1,5 bis +/- 2,5 Winkelgrad.

Die genannten Werte für den dritten Winkelbereich und den weiteren Winkelbereich sind insbesondere vorteilhaft für Gelenkbeugewinkel von bis zu 6 bzw. 10 Winkelgrad (geringe Hertz'sche Pressung in dem für die Lebensdauer des Tripode-Gleichlaufgelenks relevantem Beanspruchungsbereich), bei gleichzeitiger Berücksichtigung der Abbeugbarkeit des Rollenkörpers, also des Kippwinkelbereichs von bis zu 10 Winkelgrad (relativ zur Mittenebene der Ausnehmung im Gelenkaußenteil).

Der Rollenkörper weist insbesondere eine konvex geformte, ballige Außenumfangsfläche auf, wobei damit innerhalb einer Führungsbahn (Ausnehmung) des Gelenkaußenteils ein Verkippen des Rollenkörpers gegenüber dem Gelenkaußenteil ermöglicht wird.

Die Erfindung ist weiterhin auf ein Tripode-Gleichlaufgelenk gerichtet, das zumindest ein hier beschriebenes Gelenkinnenteil, an jedem Zapfen einen drehbar gelagerten erfindungsgemäßen Rollenkörper sowie ein Gelenkaußenteil mit axial verlaufenden Ausnehmungen zur Führung je eines Rollenkörper entlang einer axialen Richtung umfasst. Dabei ist vorgesehen, dass gegenüberliegende Bereiche der zweiten Mantellinien jedes Zapfens, die im Betrieb in Kontakt mit den konvexen Innenumfangsflächen der Rollenkörper sind, jeweils einen Kreisabschnitt eines Konturkreises bilden, deren Kreismittelpunkte jeweils in einer Distanz von der Längsachse des Zapfens angeordnet sind, wobei gilt, dass ein Verhältnis der Distanz zu dem Inkugel-Radius einen Betrag von 0,02 bis 0,38 aufweist.

Mit anderen Worten bedeutet das, dass die gegenüberliegenden Abschnitte der zweiten Mantellinien (insbesondere über die Berührungspunkte hinweg) nach Art eines Kreisbogenabschnitts geformt sind, wobei die Kreisbogenabschnitte insbesondere bezüglich der Längsachse des Zapfens spiegelsymmetrisch ausgebildet sind. Darauf liegend können in der zweiten Ebene so genannte Konturkreise gebildet werden, deren Kreismittelpunkt nicht auf der Längsachse sondern davon entfernt mit einer Distanz senkrecht zur Längsachse positioniert sind, so dass eine Art "Offset" gebildet ist. Dabei gilt, dass das Verhältnis (V4) der Distanz (D) zu dem Inkugel-Radius (IKR) einen Betrag von 0,02 bis 0,38 aufweist (V4 = D/IKR; 0,02 ≤ V4 ≤ 0,38). Für die zweite Mantellinie gilt also insbesondere, dass die zwei Konturkreise jeweils einen kleineren Konturkreisradius aufweisen als die Inkugel mit ihrem Inkugel-Radius.

Die Festlegung einer unteren Grenze (hier V4 = 0,02) dient dazu sicherzustellen, dass bei Abbeugung des Tripode-Gleichlaufgelenks und geringem Spiel zwischen Rollenkörper und Zapfen (im Bereich der ersten Mantellinie) kein Klemmen auftritt. Die Festlegung der oberen Grenze begrenzt das, bei Abbeugung des Tripode-Gleichlaufgelenks zyklisch auftretende, Spiel zwischen Rollenkörper und Zapfen (im Bereich der zweiten Mantellinie) auf einen niedrigen Wert. Hierdurch werden NVH-Probleme beim Lastwechsel vermieden.

Bevorzugt ist weiter, dass die ersten Mantellinien in jeweils hierzu um 90 Winkelgrad in Umfangsrichtung versetzten Abschnitten, die im Betrieb in Kontakt mit den konvexen Innenumfangsflächen der Rollenkörper kommen, jeweils so geformt sind, dass dort Konturkreise mit deutlich größerem Konturkreisradius bzw. sogar mit unendlich großem Konturkreisdurchmesser (nach Art eines Geradenabschnitts) gebildet werden können.

Weiterhin wird eine Ausgestaltung eines Tripode-Gleichlaufgelenks vorgeschlagen, die zumindest ein hier beschriebenes Gelenkinnenteil, an jedem Zapfen einen drehbar gelagerten erfindungsgemäßen Rollenkörper sowie ein Gelenkaußenteil mit axial verlaufenden Ausnehmungen zur Führung je eines Rollenkörper entlang einer axialen Richtung umfasst. Dabei ist vorgesehen, dass die Ausnehmungen ein Paar axial verlaufende Führungsflächen aufweisen, an denen sich die Rollenkörper in einer Umfangsrichtung abstützen, wobei mindestens eine Abstützfläche zwischen dem Paar Führungsflächen angeordnet ist, die eine Kippbewegung der Rollenkörper um eine Kippachse beschränkt, wobei die Kippachse der Rollenkörper durch die Schnittlinie der Zentralebene des Rollenkörpers mit der parallel zur Gelenkachse des Gelenkaußenteils verlaufenden Mittenebene der Führungsflächen gebildet wird.

Insbesondere sind zwei Abstützflächen vorgesehen, die jeweils benachbart zu den Führungsflächen angeordnet sind. Dabei sind die Abstützflächen insbesondere außermittig zwischen den Führungsflächen ausgebildet.

Die, insbesondere ballige, Außenumfangsfläche der Rollenkörper ermöglicht es, dass der Rollenkörper in den axial verlaufenden Ausnehmungen des Gelenkaußenteils (reibungsarm) eine Kippbewegung durchführen kann. Die Führungsflächen in den Ausnehmungen des Gelenkaußenteils sind an diese Form der Rollenkörper angepasst. Damit kann der für den jeweiligen Beugewinkel des Tripode-Gleichlaufgelenks notwendige Kippwinkel des Zapfens gegenüber dem Rollenkörper reduziert werden, weil der Rollenkörper mit dem Gelenkinnenteil gegenüber dem Gelenkaußenteil eine gleichgerichtete Kippbewegung ausführt. Diese Reduzierung der Kippbewegung kann einen Kontakt zwischen Rollenkörper und Gelenkinnenteil insbesondere im Bereich des Übergangsradius mit minimalem Wert verhindern, so dass größere Beugewinkel zwischen Gelenkinnenteil und Gelenkaußenteil realisiert werden können. Die Beschränkung der Kippbewegung des Rollenkörpers durch die Abstützfläche ist insbesondere auch vorgesehen, damit bei starker Abbeugung des Gelenkinnenteils gegenüber dem Gelenkaußenteil der Rollenkörper nicht in den axial verlaufenden Ausnehmungen des Gelenkaußenteils verkantet.

Die in axialer Richtung verlaufenden Abstützflächen erstrecken sich über eine vorgegebene Tiefe der Ausnehmung (in Umfangsrichung) und jeweils in radialer Richtung nach innen hin zum Gelenkinnenteil des Tripode-Gleichlaufgelenks. Die Abstützflächen werden insbesondere durch das Material des Gelenkaußenteils gebildet, sind also in dem Gelenkaußenteil integriert.

Die mindestens eine Abstützfläche ist bevorzugt so angeordnet, dass die Rollenkörper um einen Kippwinkelbereich von maximal 10 Winkelgrad um die Kippachse herum kippbar sind. Der Kippwinkelbereich beträgt insbesondere maximal +/- 10 Winkelgrad (um eine Normalstellung), insbesondere maximal +/- 6 Winkelgrad um die Kippachse herum.

Diese Grenzen für den Kippwinkelbereich ergeben einen besonders vorteilhaften Kompromiss für maximalen Beugewinkel und gute NVH-Eigenschaften. Es können somit zyklische Axialkräfte 3. Ordnung und Hochfrequenz-Verschiebekräfte minimiert werden.

Für ein Tripode-Gleichlaufgelenk mit Nenndrehmoment 3300 Nm [Newtonmeter] können die folgenden vorteilhaften (ungefähren) Werte beispielhaft angegeben werden:

| | |
|---|---|
| • Außendurchmesser Gelenkaußenteil: | 82 mm |
| • PCR (Pitch Circle Radius - Abstand Mittelebene der jeweiligen Führungsflächen von der Gelenkachse des Gelenkaußenteils): | 24 bis 25 mm |
| • Höhe: | 23 bis 26 mm |
| • Übergangsradius (maximaler Betrag): | 9 mm |
| • Übergangsradius (minimaler Betrag): | 1,5 mm |
| • Erster Krümmungsradius im Kontaktpunkt (eKRmax): | 4831,40 mm |
| • Inkugelradius (IKR): | 9,59 mm |
| • Distanz: | 2,02 mm |
| • Radius des Konturkreises (IKR - Distanz): | 7,57 mm |

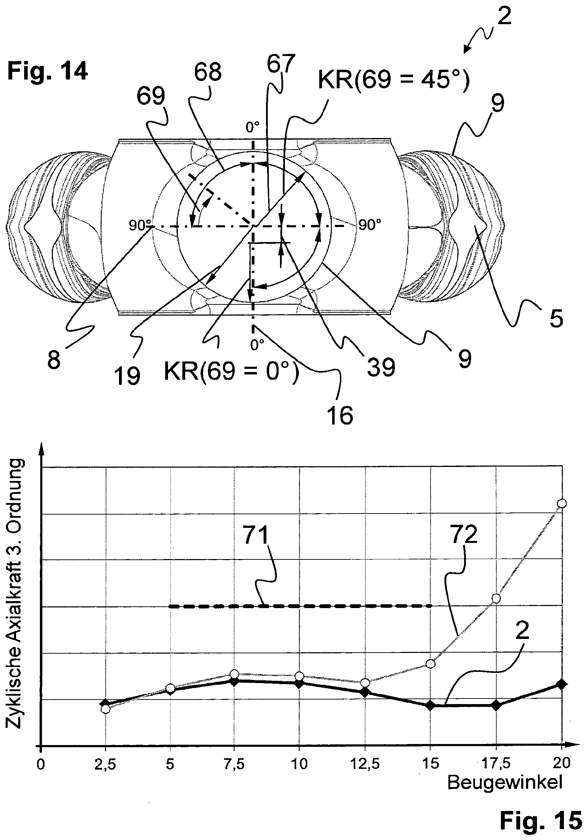

Insbesondere wird vorgeschlagen, dass die Höhe des größten Durchmessers jedes Zapfens um +1 mm bis -1 mm gegenüber dem PCR versetzt angeordnet ist. Durch diesen Versatz lässt sich der Verlauf der Axialkraft 3. Ordnung ebenfalls beeinflussen. Insbesondere kann in dem Verlauf der Axialkraft 3. Ordnung die Höhe des Maximums und des Minimums so wie die Position des Maximums und des Minimums in Abhängigkeit vom Beugewinkel beeinflusst werden (vergleiche Fig. 15: Maximum bei 7,5 Winkelgrad und Minimum zwischen 15 und 17,5 Winkelgrad Beugewinkel).

In der dritten Ebene jedes Zapfens erstreckt sich jeweils zwischen der ersten Ebene und der zweiten Ebene ein vierter Winkelbereich von jeweils 90°. Der Verlauf der Umfangsfläche des Zapfens entlang der radialen Richtung ausgehend von der Drehachse wird jeweils durch eine Mantellinie gebildet. Zumindest im Schnittpunkt zwischen der dritten Ebene, der Umfangsfläche des Zapfens und eines Winkelbetrages innerhalb des vierten Winkelbereichs wird diese Mantellinie durch jeweils einen zweiten Krümmungsradius (KR) gebildet und damit der Verlauf der Mantellinie der Umfangsfläche entlang der radialen Richtung beschrieben. Der Betrag dieses zweiten Krümmungsradius verändert sich kontinuierlich entlang des vierten Winkelbereichs ausgehend von dem ersten Krümmungsradius der ersten Mantellinie im Bereich der ersten Ebene. Der jeweilige Krümmungsradius wird mit KR bezeichnet. Ein Winkelbetrag von 0° liegt jeweils in der zweiten Ebene vor. Ein Winkelbetrag von 90° liegt jeweils in der ersten Ebene vor. Das bedeutet, dass bei einem Winkelbetrag von 0° der Krümmungsradius der zweiten Mantellinie den Verlauf der Umfangsfläche des Zapfens entlang der radialen Richtung beschreibt. Dieser (zweite) Krümmungsradius der zweiten Mantellinie entspricht im Wesentlichen dem Inkugel-Radius abzüglich der Distanz. Bei einem Winkelbetrag von 90° wird der Verlauf der Umfangsfläche durch den ersten Krümmungsradius der ersten Mantellinie beschrieben. Für das oben angeführte beispielhafte Tripode-Gleichlaufgelenk mit Nenndrehmoment 3300 Nm können die folgenden Werte für die (zweiten) Krümmungsradien angenommen werden (siehe Tabelle 1):

**Tabelle 1**

| Winkelbetrag °[Winkelgrad] | (zweiter) Krümmungsradius (KR) mm [Millimeter] | V1 = KR / IKR | Anmerkung |
|---|---|---|---|
| 0 | 7,59 | 0,79 | ca. IKR - Distanz |
| 5 | 7,81 | 0,81 | |
| 10 | 8,03 | 0,84 | |
| 15 | 8,25 | 0,86 | |
| 20 | 8,47 | 0,88 | |
| 25 | 8,70 | 0,91 | |
| 30 | 8,92 | 0,93 | |
| 35 | 9,14 | 0,95 | |
| 40 | 9,36 | 0,98 | |
| 45 | 9,59 | 1,00 | IKR |
| 50 | 9,86 | 1,03 | |
| 55 | 10,27 | 1,07 | |
| 60 | 11,16 | 1,16 | |
| 65 | 13,16 | 1,37 | |
| 70 | 17,89 | 1,87 | |
| 75 | 30,98 | 3,23 | |
| 80 | 79,68 | 8,31 | |
| 85 | 383,17 | 39,98 | |
| 90 | 4831,40 | 504,06 | eKRmax |

Insbesondere wird vorgeschlagen, dass das Gelenkinnenteil, der Rollenkörper und/oder das Tripode-Gleichlaufgelenk in einem Kraftfahrzeug eingesetzt werden kann/ können. Insbesondere dienen diese Bauteile zur Verbindung und Übertragung von Drehmomenten von einer Antriebseinheit auf die Räder eines Kraftfahrzeugs. Dies erfolgt entweder in Kombination mit einer Längswelle oder mit quer zu einer Fahrzeugachse angeordneten Wellen, also Seitenwellen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. In den Figuren bezeichnen gleiche Bezugszeichen gleiche Gegenstände. Es zeigen:
- Fig. 1:: ein Kraftfahrzeug;
- Fig. 2:: ein Gelenkinnenteil;
- Fig. 3:: ein Gelenkinnenteil in einer Seitenansicht;
- Fig. 4:: ein Gelenkinnenteil gemäß Fig. 3 im Schnitt;
- Fig. 5:: ein Gelenkinnenteil in einer Ansicht entlang der Drehachse;
- Fig. 6:: einen Ausschnitt A aus Fig. 5;
- Fig. 7:: ein Gelenkinnenteil gemäß Fig. 5 im Querschnitt;
- Fig. 8:: einen Rollenkörper;
- Fig. 9:: eine Komponente des Rollenkörpers gemäß Fig. 8;
- Fig. 10:: ein Tripode-Gleichlaufgelenk in perspektivischer Ansicht;
- Fig. 11:: einen Ausschnitt eines Tripode-Gleichlaufgelenks in perspektivischer Ansicht;
- Fig. 12:: ein Tripode-Gleichlaufgelenk in einer Seitenansicht im Schnitt;
- Fig. 13:: das Tripode-Gleichlaufgelenk gemäß Fig. 12 ebenfalls in Seitenansicht und im Schnitt;
- Fig. 14:: das Gelenkinnenteil in einer Draufsicht zur Darstellung des zweiten Krümmungsradius; und
- Fig. 15:: ein Diagramm zur Darstellung des Verlaufs der zyklischen Axialkraft 3. Ordnung in Abhängigkeit von dem Beugewinkel.

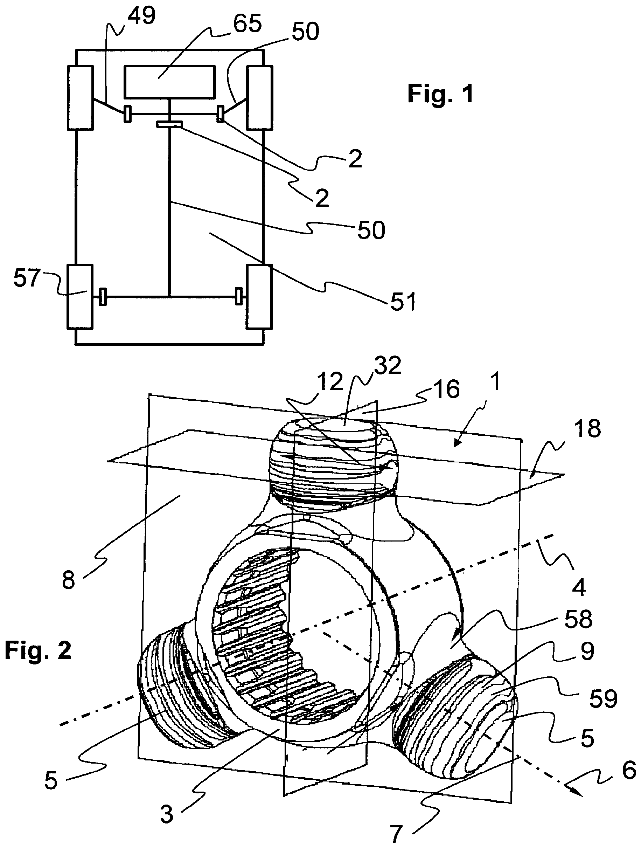

Fig. 1 zeigt ein Kraftfahrzeug 51 mit einer Antriebseinheit 65 und Rädern 57. Von der Antriebseinheit 65 erzeugte Drehmomente werden über Wellen 50 und Tripode-Gleichlaufgelenke 2 oder andere Gelenktypen auf die Räder 57 übertragen. Insbesondere sind die hier beschriebenen Tripode-Gleichlaufgelenke 2 in Seitenwellenanordnungen 49 einsetzbar, bei denen regelmäßig größere Beugewinkel auftreten.

Fig. 2 zeigt ein Gelenkinnenteil 1 eines Tripode-Gleichlaufgelenkes 2 umfassend eine Nabe 3 mit einer Drehachse 4 und drei Zapfen 5, die sich von der Nabe 3 in einer radialen Richtung 6 nach außen erstrecken, wobei zunächst ein Übergangsbereich 58, dann ein Lagerbereich 59 und schließlich eine Stirnfläche 32 ausgebildet sind. Jeder Zapfen 5 weist eine Längsachse 7 und eine ballige Umfangsfläche 9 im Lagerbereich 59 auf. Die Längsachsen 7 spannen gemeinsam eine erste Ebene 8 senkrecht zur Drehachse 4 auf. Eine zweite Ebene 16 ist senkrecht zur ersten Ebene 8 angeordnet und umfasst jeweils die Längsachse 7 eines einzelnen Zapfens 5. Eine dritte Ebene 18 verläuft senkrecht zu der ersten Ebene 8 und zu der zweiten Ebene 16, wobei ein größter Durchmesser 12 des Zapfens 5 in dieser dritten Ebene 18 angeordnet ist.

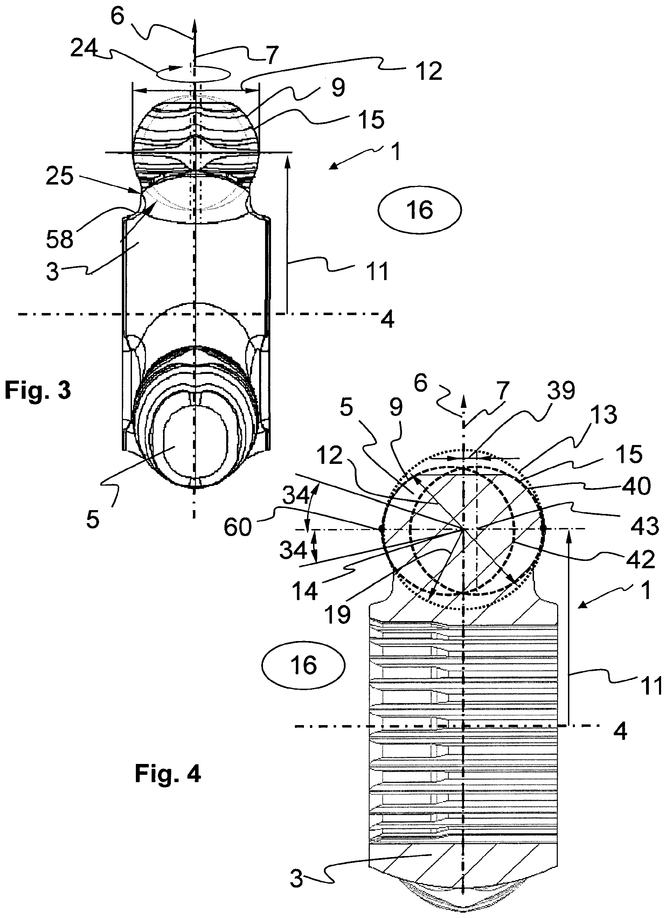

Fig. 3 zeigt ein Gelenkinnenteil 1 in einer Seitenansicht, wobei sich ausgehend von der Nabe 3 drei Zapfen 5 in der radialen Richtung 6 nach außen erstrecken. Die ballige Umfangsfläche 9 des Zapfens 5 wird in der zweiten Ebene 16 (hier parallel zu der Ebene der Darstellung) durch eine zweite Mantellinie 15 gebildet. Der Zapfen 5 weist einen größten Durchmesser 12 auf, der in der radialen Richtung 6 ausgehend von der Drehachse 4 auf einer Höhe 11 angeordnet ist. Zwischen Zapfen 5 und Nabe 3 ist ein Übergangsradius 25 vorgesehen, der hier in der zweiten Ebene 16 mit einem minimalen Betrag ausgeführt ist. Es ist zu erkennen, dass sich der Zapfen 5 in der zweiten Ebene 16 und ausgehend von dem größten Durchmesser 12 (entlang der zweiten Mantellinie 15) hin zur Nabe 3 weiter verjüngt. An diese Verjüngung schließt sich der Übergangsbereich 58 hin zur Nabe 3 an. Unterhalb des Übergangsradius 25, in Richtung der Drehachse 4 des Gelenkinnenteils 1, ist ein Freistich ausgebildet, in den, bei einer Kippbewegung eines auf dem Zapfen 5 angeordneten Rollenkörpers 28 (hier nicht dargestellt), dieser Rollenkörper 28 eintauchen kann, ohne das Gelenkinnenteil 1 zu kontaktieren.

Fig. 4 zeigt das Gelenkinnenteil 1 gemäß Fig. 3 im Querschnitt. Der Zapfen 5 weist auf der Höhe 11 einen größten Durchmesser 12 auf, der dem Durchmesser einer Inkugel 13 (gepunktet dargestellt) entspricht. In der hier gezeigten zweiten Ebene 16 wird die Umfangsfläche 9 des Zapfens 5 durch eine zweite Mantellinie 15 gebildet. Diese zweite Mantellinie 15 erstreckt sich, ausgehend von dem größten Durchmesser 12 auf der Höhe 11 und in radialer Richtung 6 nach außen, innerhalb der Inkugel 13. Der Verlauf der zweiten Mantellinie 15 kann durch die Kreisabschnitte 40 zweier Konturkreise 42 (gestrichelt dargestellt) angenähert werden, deren Kreismittelpunkte 43 auf der Höhe 11 jeweils in einer Distanz 39 zur Längsachse 7 angeordnet sind. Die Kreismittelpunkte 43 liegen also in einer Distanz 39 zu dem Mittelpunkt 14 der Inkugel 13. Während die Inkugel 13 einen größten Durchmesser 12 und damit einen Inkugel-Radius 19 aufweist, wird die zweite Mantellinie 15, zumindest teilweise, durch die Kreisabschnitte 40 der Konturkreise 42 mit einem kleineren Radius erzeugt, wobei dieser dem Inkugel-Radius 19 abzüglich der Distanz 39 entspricht.

Insbesondere verläuft die zweite Mantellinie 15 auch in einem Bereich zwischen der Höhe 11 und der Nabe 3 zumindest teilweise innerhalb der Inkugel 13.

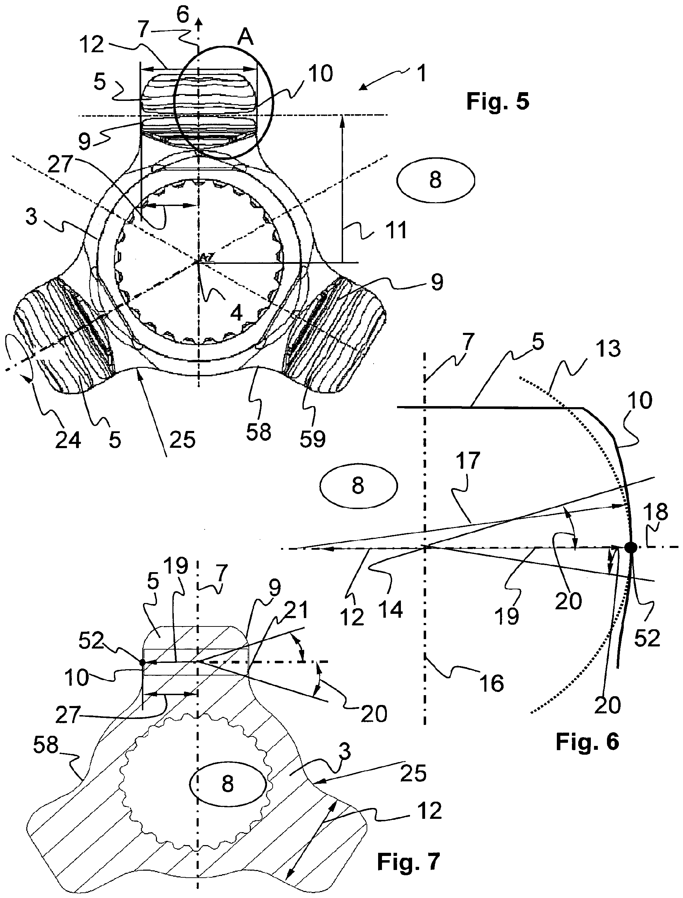

Fig. 5 zeigt ein Gelenkinnenteil 1 in einer Draufsicht entlang der Drehachse 4. Ausgehend von der Nabe 3 erstrecken sich drei Zapfen 5 jeweils entlang einer Längsachse 7 in der radialen Richtung 6. In der ersten Ebene 8 (parallel zu der Ebene der Darstellung) wird die Umfangsfläche 9 der Zapfen 5 durch die erste Mantellinie 10 gebildet. In dem Lagerbereich 59, auf der Höhe 11, ausgehend von der Drehachse 4 entlang der Längsachse 7 eines jeden Zapfens 5 in radialer Richtung 6, weist der Zapfen 5 einen größten Durchmesser 12 auf. Ausgehend von diesem größten Durchmesser 12 verjüngt sich der Zapfen 5 entlang der ersten Mantellinie 10 in der radialen Richtung 6 nach außen. Zwischen Zapfen 5 und Nabe 3 ist im Übergangsbereich 58 ein maximaler Übergangsradius 25 vorgesehen. Es ist hier erkennbar, dass die erste Mantellinie 10, ausgehend von der Höhe 11 und in Richtung der Nabe 3, einen nahezu konstanten Abstand 27 zu der Längsachse 7 aufweist, der im Wesentlichen dem Inkugel-Radius 19 (hier nicht gezeigt) und damit dem halben größten Durchmesser 12 entspricht. Ausgehend von diesem Abstand 27 verbreitert sich der Zapfen 5 in dem Übergangsbereich 58 hin zur Nabe 3 ausschließlich. Ein Freistich bzw. eine Aussparung, wie in der zweiten Ebene 16 in Fig. 2 und 3 gezeigt, ist hier nicht realisiert. In dieser ersten Ebene 8 erfolgt die Kippbewegung des Rollenkörpers 28 (hier nicht gezeigt) gegenüber dem Zapfen 5 in weitaus geringerem Maß als in der zweiten Ebene 16. Der Übergangsbereich 58 mit dem maximalen Übergangsradius 25 ermöglicht nun, dass der Zapfen 5 in dieser ersten Ebene 8 keine (oder nur eine sehr geringe) Verjüngung zwischen der Nabe 3 und der Höhe 11 aufweist. Damit können hohe Umfangskräfte und damit hohe Drehmomente übertragen werden, wobei auch kleinere Baugrößen der Tripode-Gleichlaufgelenke 2 als bisher üblich eingesetzt werden können, die dann ebenfalls eine hohe Lebensdauer erreichen.

Fig. 6 zeigt einen Ausschnitt A aus Fig. 5. Gezeigt ist der Zapfen 5 in der ersten Ebene 8 (Ebene der Darstellung). Die erste Mantellinie 10 verläuft in der ersten Ebene 8 außerhalb der angedeuteten Inkugel 13 und kontaktiert diese Inkugel 13 mit dem Inkugel-Radius 19 im Bereich des Kontaktpunkts 52. In diesem Kontaktpunkts 52 hat der Zapfen 5 seinen größten Durchmesser 12. Durch den Kontaktpunkt 52 und über den größten Durchmesser 12 erstreckt sich die dritte Ebene 18 quer zur ersten Ebene 8. Auf der dritten Ebene 18 und im Schnittpunkt mit der zweiten Ebene 16 sowie der ersten Ebene 8 liegt der Mittelpunkt 14 der Inkugel 13. Die erste Mantellinie 10 weist im Bereich des Kontaktpunkts 52 einen maximalen ersten Krümmungsradius 17 auf, der in ersten Winkelbereichen 20, die beidseits benachbart zu dem Kontaktpunkt 52 liegen, vorliegt.

Fig. 7 zeigt das Gelenkinnenteil 1 gemäß Fig. 5 im Schnitt. Der Zapfen 5 wird in der ersten Ebene 8 (Ebene der Darstellung) durch die erste Mantellinie 10 begrenzt. Diese weist im Bereich des größten Durchmessers 12 eine Gerade 21 auf, die sich über erste Winkelbereiche 20 erstreckt. Die Winkelbereiche 20 schließen den Kontaktpunkt 52 mit ein. Die Bereiche der ersten Mantellinie 10, die im Betrieb des Tripode-Gleichlaufgelenks 2 die Innenumfangsfläche 29 eines Rollenkörpers 28 kontaktieren, werden hier durch gegenüberliegende Geradenabschnitte (Konturkreise mit unendlich großem Radius) gebildet. Die gestrichelten Linien am oberen Zapfen 5 verdeutlichen, dass sich die Geradenabschnitte gegenüberliegen und verdeutlichen die Erstreckung der Gerade 21 entlang der ersten Mantellinie 10.

Zwischen dem Kontaktpunkt 52 und der Nabe ist der Übergangsbereich 58 angeordnet. Die erste Mantellinie 10 setzt sich nun zwischen dem Kontaktpunkt 52 hin zu der Nabe 3 im Wesentlichen parallel zur Längsachse 7 in einem (konstanten) Abstand 27 fort. Der Übergangsbereich 58 wird durch den maximalen Übergangsradius 25 gebildet, wobei hier insbesondere keine Verjüngung des Zapfens 5 vorliegt.

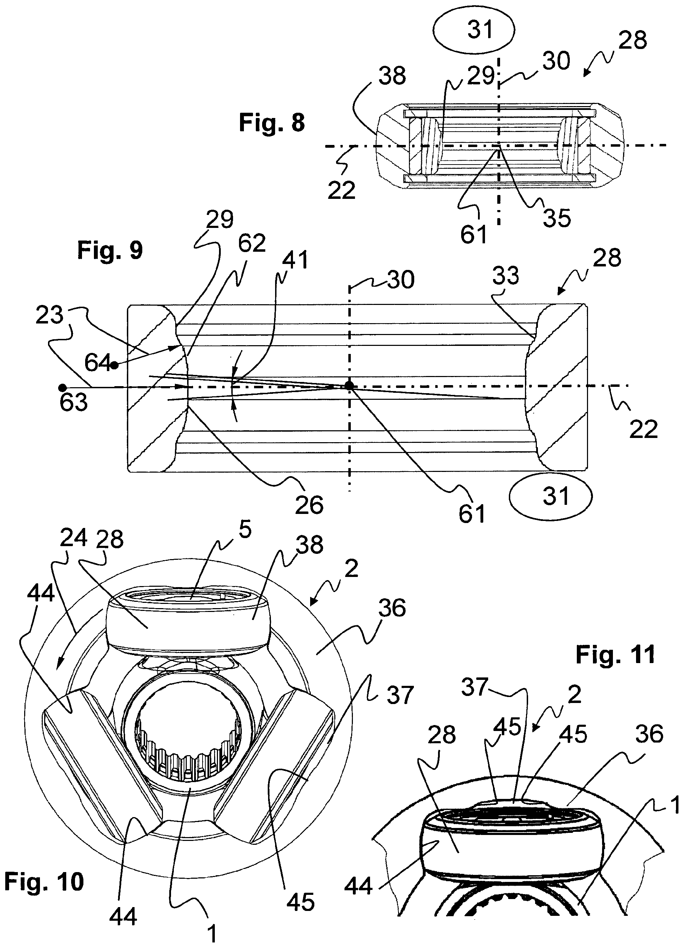

Fig. 8 zeigt einen Rollenkörper 28, der auf einen der Zapfen 5 (hier nicht gezeigt) angeordnet wird. Der Rollenkörper 28 wird hier gebildet durch mehrere einzelne Komponenten, wobei der Rollenkörper 28 eine Außenumfangsfläche 38 und eine Innenumfangsfläche 29 aufweist. Die Außenumfangsfläche 38 ist im Kontakt mit dem Gelenkaußenteil (hier nicht gezeigt) und die Innenumfangsfläche 29 ist im Kontakt mit der balligen Umfangsfläche 9 des Zapfens 5. Bezüglich des Rollenkörpers 28 kann eine die Mittelachse 30 erfassende Mittelebene 31 (Ebene der Darstellung) sowie eine dazu zentrisch angeordnete Zentralebene 22 festgelegt werden, wobei der Schnittpunkt 35 aus Mittelachse 30 und Zentralebene 22 das Zentrum 61 des Rollenkörpers 28 bildet. Der Rollenkörper 28 weist eine rotationssymmetrische Form um die Mittelachse 30 auf und ist im Wesentlichen spiegelsymmetrisch um die Zentralebene 22 herum ausgeführt.

Fig. 9 zeigt eine Komponente des Rollenkörpers 28 gemäß Fig. 8 im Schnitt in der Mittelebene 31 (Ebene der Darstellung), wobei hier die Innenumfangsfläche 29 im Detail gezeigt ist. Die konvex geformte Innenumfangsfläche 29 ist rotationssymmetrisch um eine Mittelachse 30 ausgebildet, wobei der Rollenkörper 28 gegenüber der Zentralebene 22, die senkrecht zur Mittelachse 30 verläuft, im Wesentlichen symmetrisch aufgebaut ist. Die Verlaufslinie 33 der konvex geformten Innenumfangsfläche 29 weist sich verändernde Verlaufsradien 23 auf und wird im Bereich der Zentralebene 22 (Zentralbereich 26) und innerhalb eines dritten Winkelbereichs 41, der sich von dem Zentrum 61 ausgehend und über die Zentralebene 22 hinaus beidseitig erstreckt, durch einen maximalen Verlaufslinienradius 63 gebildet und daran anschließend (im angrenzenden Bereich 62) durch jeweils zumindest einen betragsmäßig kleineren Verlaufslinienradius 64. Im Anschluss an den jeweils kleineren Verlaufslinienradius 64 ist hier ein Abschnitt mit eine konkav geformter Verlaufslinie 33 der Innenumfangsfläche 29 zu erkennen, an den sich erneut ein konvex geformter Abschnitt anschließt.

Der Teil der Innenumfangsfläche 29, der nun im Betrieb eines Tripode-Gleichlaufgelenks 2 mit dem Zapfen 5 eines (erfindungsgemäßen) Gelenkinnenteils 1 im Kontakt ist, wird durch die konvexe Innenumfangsfläche 29 mit maximalen Verlaufslinienradius 63 und den jeweils anschließenden kleineren Verlaufslinienradien 64 gebildet.

Die Innenumfangsfläche 29, die durch den maximalen Verlaufslinienradius 63 gebildet wird, erstreckt sich über einen dritten Winkelbereich 41, ausgehend vom Zentrum 61 über die Zentralebene 22 um +/- 1 Winkelgrad bis +/- 6 Winkelgrad, insbesondere von +/- 1,5 bis +/- 2,5 Winkelgrad. Insbesondere weist der dritte Winkelbereich 41 also einen Bereich von 2 bis 12, insbesondere von 3 bis 5 Winkelgrad auf. Weiter erstreckt sich die Verlaufslinie 33 der Innenumfangsfläche 29, die jeweils mit den kleineren Verlaufsradien 64 gebildet ist, über jeweils einen (weiteren) Winkelbereich, ausgehend vom Zentrum 61 und beidseitig (also symmetrisch oberhalb und unterhalb der Zentralebene 22) jeweils anschließend an den dritten Winkelbereich 41, von +/- 1 bis +/- 6 Winkelgrad, insbesondere von +/-1,5 bis +/- 2,5 Winkelgrad.

Fig. 10 zeigt ein Tripode-Gleichlaufgelenk 2 in einer perspektivischen Ansicht. Ein Gelenkaußenteil 36 weist drei in der axialen Richtung 56 (in die Ebene der Darstellung hinein) verlaufende Ausnehmungen 37 auf, in denen die Rollenkörper 28, in der axialen Richtung 56 verschiebbar, angeordnet sind. Die Rollenkörper 28 sind auf Zapfen 5 eines Gelenkinnenteils 1 angeordnet. Im gestreckten Zustand des Tripode-Gleichlaufgelenks 2 liegen die Höhe 11, die dritte Ebene 18, der größte Durchmesser 12 und die Zentralebene 22 im Wesentlichen fluchtend zueinander. Ein Drehmoment wird, ausgehend hier z. B. von dem Gelenkaußenteil 36, in Umfangsrichtung 24 über die Führungsflächen 44 und die Außenumfangsfläche 38 des Rollenkörpers 28 und weiter über die Innenumfangsfläche 29 des Rollenkörpers 28 auf die ballige Umfangsfläche 9 der Zapfen 5 übertragen, so dass das Gelenkinnenteil 1 mit dem Gelenkaußenteil 36 in Umfangsrichtung 24 rotiert. In der jeweiligen Ausnehmung 37 ist eine Abstützfläche 45 vorgesehen, die hier mittig gegenüber den Führungsflächen 44 im Gelenkaußenteil 36 angeordnet ist und so eine Kippbewegung 46 des Rollenkörpers 28 beschränkt.

Fig. 11 zeigt eine weitere Ausführungsvariante der Gestaltung eines Gelenkaußenteils 36, wobei hier zwei Abstützflächen 45 in der Ausnehmung 37 für die Rollenkörper 28 vorgesehen sind. Diese sind erkennbar außermittig und jeweils benachbart zu den Führungsflächen 44 angeordnet.

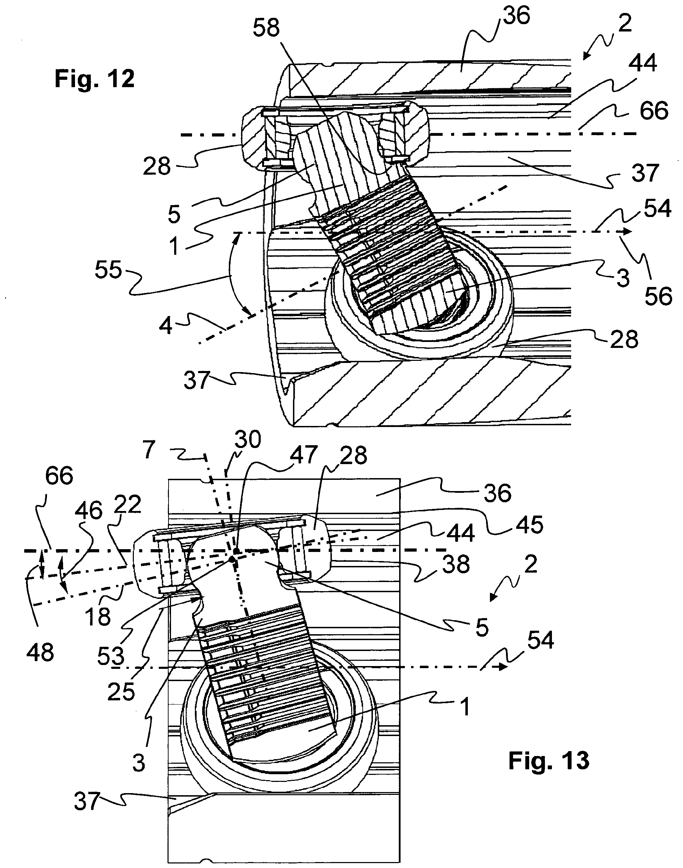

Fig. 12 zeigt ein Tripode-Gleichlaufgelenk 2 in einer Seitenansicht im Schnitt, wobei ein Gelenkaußenteil 36 mit Ausnehmungen 37 und darin angeordneten Führungsflächen 44 einen Rollenkörper 28 aufnimmt, der in axialer Richtung 56 verschiebbar angeordnet ist. Die Rollenkörper 28 sind auf Zapfen 5 angeordnet, wobei hier erkennbar ist, dass das Gelenkinnenteil 1 gegenüber dem Gelenkaußenteil 36 um einen Beugewinkel 55 abgebeugt ist. Entsprechend wird zwischen Drehachse 4 und Gelenkachse 54 ein Beugewinkel 55 ausgebildet. Die Führungsflächen 44 weisen eine Mittenebene 66 auf, die sich parallel zur Gelenkachse 54 des Gelenkaußenteils 36 erstreckt. Zu erkennen ist, dass der Rollenkörper 28 in die Aussparung/ den Freistich im Bereich des Übergangsbereichs 58 mit dem minimalen Übergangsradius 25 eintaucht, so dass der maximal mögliche Beugewinkel 55 vergrößert wird (vgl. auch Fig 13).

Fig. 13 zeigt ein Tripode-Gleichlaufgelenk 2 in einer Seitenansicht im Schnitt, wobei das Gelenkinnenteil 1 gegenüber dem Gelenkaußenteil 36 um einen Beugewinkel 55 abgebeugt angeordnet ist (vergleiche mit Fig. 12). Auf dem Zapfen 5 sind Rollenkörper 28 angeordnet, wobei der Rollenkörper 28 gegenüber der Gelenkachse 54 und gegenüber der dritten Ebene 18 des Zapfens 5 gekippt angeordnet ist. Der Rollenkörper 28 kann aufgrund seiner speziell geformten, balligen Außenumfangsfläche 38 und den entsprechend geformten Führungsflächen 44 eine Kippbewegung 46 um eine Kippachse 47 ausführen. Diese Kippachse 47 des Rollenkörpers 28 ist die Schnittlinie der Zentralebene 22 des Rollenkörpers 28 mit der parallel zur Gelenkachse 54 des Gelenkaußenteils 36 verlaufenden Mittenebene 66 der Führungsflächen 44.

Die Kippachse 47 verläuft parallel zu Achse 53, die durch die dritte Ebene 18 des Zapfens 5 und die Längsachse 7 des Zapfens gebildet wird. Zu erkennen ist, dass der Rollenkörper 28 gegenüber der Mittenebene 66 der Ausnehmung 37 um den Kippwinkel 48 verkippt.

Durch die Kippbewegung 46 um die Kippachse 47 kann der Beugewinkel 55 zwischen Gelenkinnenteil 1 und Gelenkaußenteil 36 weiter vergrößert werden, da der Rollenkörper 28 bis zu einem Kippwinkel 48 zusammen mit dem Gelenkinnenteil 1 kippt und die Begrenzung des Beugewinkels 55 durch Anschlag des Rollenkörpers 28 an das Gelenkinnenteil 1 erst bei sehr hohen Beugewinkeln 55 auftritt.

Die Kippbewegung 46 des Rollenkörpers 28 wird durch die Abstützflächen 45 in der Ausnehmung 37 des Gelenkaußenteils 36 begrenzt. Damit wird ein Verkanten des Rollenkörpers 28 in den Führungsflächen 44 der Ausnehmung 37 verhindert.

Fig. 14 zeigt das Gelenkinnenteil 1 in einer Draufsicht zur Darstellung des zweiten Krümmungsradius 67. In der dritten Ebene 18 jedes Zapfens 5 erstreckt sich jeweils zwischen der ersten Ebene 8 und der zweiten Ebene 16 ein vierter Winkelbereich 68. Der Verlauf der Umfangsfläche 9 des Zapfens 5 entlang der radialen Richtung 6 ausgehend von der Drehachse 4 (hier nicht dargestellt) wird jeweils durch eine Mantellinie gebildet. Im Schnittpunkt zwischen der dritten Ebene, der Umfangsfläche 9 des Zapfens 5 und eines Winkelbetrages 69 innerhalb des vierten Winkelbereichs 68 wird diese Mantellinie durch jeweils einen zweiten Krümmungsradius 67 gebildet. Der Betrag dieses zweiten Krümmungsradius 67 verändert sich kontinuierlich entlang des vierten Winkelbereichs 68 ausgehend von dem ersten Krümmungsradius 17 der ersten Mantellinie 10 im Bereich der ersten Ebene 8 (KR(Winkelbetrag 69 = 90°) = eKRmax) bis hin zum (zweiten) Krümmungsradius der zweiten Mantellinie 15 im Bereich der zweiten Ebene 16 (KR(Winkelbetrag 69 = 0° = IKR - Distanz). Dieser (zweite) Krümmungsradius der zweiten Mantellinie 15 entspricht, gemäß Beschreibung zu Fig. 4, dem Inkugel-Radius 19 abzüglich der Distanz 39. Bei einem Winkelbetrag 69 von 45° entspricht der zweite Krümmungsradius 67 dem Inkugelradius 19 (KR(Winkelbetrag 69 = 45°) = IKR).

Fig. 15 zeigt ein Diagramm zur Darstellung des Verlaufs der zyklischen Axialkraft 3. Ordnung 70 in Abhängigkeit von dem Beugewinkel 55 des Tripode-Gleichlaufgelenks 2. Die zyklische Axialkraft 3. Ordnung 70 ist die das NVH-(noise, vibration, harshness) Verhalten bestimmende Größe des Tripode-Gleichlaufgelenks 2. Die besondere Ausführung des Zapfens 5 und des Rollenkörpers 28 bewirkt, dass auch bei größeren Beugewinkeln 55 die zyklische Axialkraft 3. Ordnung 70 nur geringe Werte aufweist. Gerade bei größeren Beugewinkeln 55 zeigt sich der Vorteil des erfindungsgemäßen Tripode-Gleichlaufgelenks 2 gegenüber einem Gelenk des Standes der Technik 72 (z. B. gemäß DE 101 06 727 B4 oder EP 1 505 308 A1). Der Verlauf der zyklischen Axialkraft 3. Ordnung 70 bleibt deutlich unter der Akzeptanzgrenze, die für solche Gelenke definiert ist. Damit ist das hier vorgeschlagene Tripode-Gleichlaufgelenk 2 gerade für Einsatzfälle geeignet, bei denen vorwiegend größere Beugewinkel 55 im Betrieb vorliegen.

Vorsorglich sei abschließend noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

### Bezugszeichenliste

- 1: Gelenkinnenteil
- 2: Tripode-Gleichlaufgelenk
- 3: Nabe
- 4: Drehachse
- 5: Zapfen
- 6: radiale Richtung
- 7: Längsachse
- 8: erste Ebene
- 9: Umfangsfläche
- 10: erste Mantellinie
- 11: Höhe
- 12: größter Durchmesser
- 13: Inkugel
- 14: Mittelpunkt
- 15: zweite Mantellinie
- 16: zweite Ebene
- 17: erster Krümmungsradius
- 18: Dritte Ebene
- 19: Inkugel-Radius
- 20: erster Winkelbereich
- 21: Gerade
- 22: Zentralebene
- 23: Verlaufslinienradius
- 24: Umfangsrichtung
- 25: Übergangsradius
- 26: Zentralbereich
- 27: Abstand
- 28: Rollenkörper
- 29: Innenumfangsfläche
- 30: Mittelachse
- 31: Mittelebene
- 32: Stirnfläche
- 33: Verlaufslinie
- 34: zweiter Winkelbereich
- 35: Schnittpunkt
- 36: Gelenkaußenteil
- 37: Ausnehmung
- 38: Außenumfangsfläche
- 39: Distanz
- 40: Kreisabschnitt
- 41: dritter Winkelbereich
- 42: Konturkreis
- 43: Kreismittelpunkt
- 44: Führungsfläche
- 45: Abstützfläche
- 46: Kippbewegung
- 47: Kippachse
- 48: Kippwinkel
- 49: Seitenwellenanordnung
- 50: Welle
- 51: Kraftfahrzeug
- 52: Kontaktpunkt
- 53: Achse
- 54: Gelenkachse
- 55: Beugewinkel
- 56: Axiale Richtung
- 57: Rad
- 58: Übergangsbereich
- 59: Lagerbereich
- 60: Berührungspunkt
- 61: Zentrum
- 62: angrenzender Bereich
- 63: maximaler Verlaufslinienradius
- 64: kleiner Verlaufslinienradius
- 65: Antriebseinheit
- 66: Mittenebene
- 67: Zweiter Krümmungsradius
- 68: Vierter Winkelbereich
- 69: Winkelbetrag
- 70: Zyklische Axialkraft 3. Ordnung
- 71: Akzeptanzgrenze
- 72: Gelenk gemäß Stand der Technik

## Patentansprüche

1. Gelenkinnenteil (1) eines Tripode-Gleichlaufgelenks (2), umfassend eine Nabe (3) mit einer Drehachse (4) und drei Zapfen (5), die sich von der Nabe (3) in einer radialen Richtung (6) nach außen erstrecken und einen an der Nabe (3) sich anschließenden Übergangsbereich (58) sowie einen Lagerbereich (59) aufweisen, wobei folgendes gilt:
- jeder Zapfen (5) weist eine Längsachse (7) und im Lagerbereich (59) eine ballige Umfangsfläche (9) auf;
- das Gelenkinnenteil (1) hat eine erste Ebene (8), die alle Längsachsen (7) der Zapfen (5) umfasst und senkrecht zur Drehachse (4) aufgespannt ist;
**dadurch gekennzeichnet, dass**
- die ballige Umfangsfläche (9) jedes Zapfens (5) bildet eine in der ersten Ebene (8) verlaufende erste Mantellinie (10), wobei auf einer Höhe (11) entlang der Längsachse (7), an der ein größter Durchmesser (12) des Zapfens (5) vorliegt, eine Inkugel (13) mit einem Inkugel-Radius (19) vorgegeben ist, deren Mittelpunkt (14) auf der Längsachse (7) an der Stelle der Höhe (11) liegt und gegenüberliegende Kontaktpunkte (52) der ersten Mantellinie (10) kontaktiert;
- die erste Mantellinie (10) jedes Zapfens (5) verläuft zumindest in, an dem jeweiligen Kontaktpunkt (52) jeweils angrenzenden, ersten Winkelbereichen (20) außerhalb der Inkugel (13), wobei jeder erste Winkelbereich (20) von dem Mittelpunkt (14) der Inkugel (13) ausgeht und sich über jeweils maximal 20 Winkelgrad beidseitig des jeweiligen Kontaktpunkts (52) erstreckt;
- eine zweite Mantellinie (15) der balligen Umfangsfläche (9) jedes Zapfens (5) in einer zweiten Ebene (16) vorliegt, wobei die zweite Ebene (16) senkrecht zu der ersten Ebene (8) angeordnet ist und die Längsachse (7) des jeweiligen Zapfens (5) enthält; und
- die zweite Mantellinie (15) die Inkugel (13) nur auf der Höhe (11) des größten Durchmessers (12) des Zapfens (5) in Berührungspunkten (60) berührt und zumindest in, an dem jeweiligen Berührungspunkt (60) jeweils angrenzenden zweiten Winkelbereichen (34) innerhalb der Inkugel (13) verläuft, wobei jeder zweite Winkelbereich (34) von dem Mittelpunkt (14) der Inkugel (13) ausgeht und sich über jeweils maximal 35 Winkelgrad beidseitig des jeweiligen Berührungspunkts (60) erstreckt,
- wobei die erste Mantellinie für die Definition der Inkugel (13) mit einem bestimmten Inkugel-Radius (19) herangezogen wird; wobei die hier zur Beschreibung der Kontur des Zapfens (5) angeführte Inkugel (13) dem Vergleich mit einer kugeligen Form des Zapfens (5) dient, von der hier abgewichen wird; wobei der größte Durchmesser (12) in der ersten Ebene (8) um ein geringes Maß von dem größten Durchmesser (12) des Zapfens (5) in der zweiten Ebene (16) abweichen kann, so dass ein Querschnitt durch den Zapfen (5) in einer dritten Ebene (18), wobei die dritte Ebene (18) sowohl zur Längsachse (7) des jeweiligen Zapfens (5) als auch zu der ersten Ebene (8) senkrecht ausgerichtet ist, leicht elliptisch ausgeformt ist.

2. Gelenkinnenteil (1) nach Patentanspruch 1, wobei die erste Mantellinie (10) im Lagerbereich (59) einen ersten Krümmungsradius (17) hat, der zumindest an dem Kontaktpunkt (52) maximal ist.

3. Gelenkinnenteil (1) nach Patentanspruch 2, wobei ein Verhältnis des Betrags des ersten Krümmungsradius (17) im Kontaktpunkt (52) zu dem Betrag des Inkugel-Radius (19) mindestens 50 beträgt.

4. Gelenkinnenteil (1) nach Patentanspruch 3, wobei das Verhältnis in einem Bereich von 100 bis 1.000 liegt.

5. Gelenkinnenteil (1) nach einem der vorhergehenden Patentansprüche, wobei die erste Mantellinie (10) jedes Zapfens (5) an den Kontaktpunkten (52) sowie in jeweils angrenzenden ersten Winkelbereichen (20) als Gerade (21) ausgeführt ist, wobei der erste Winkelbereich (20) von dem Mittelpunkt (14) der Inkugel (13) ausgeht und sich zumindest einseitig über 2 bis 20 Winkelgrad benachbart des Kontaktpunkts (52) erstreckt.

6. Gelenkinnenteil (1) nach einem der vorhergehenden Patentansprüche, wobei jeder Zapfen (5) in dem Übergangsbereich (58) einen Übergangsradius (25) ausbildet, dessen Betrag in einer Umfangsrichtung (24) um die Längsachse (7) des Zapfens (5) variiert, wobei die Beträge des Übergangsradius (25) in der ersten Ebene (8) maximal und in Umfangsrichtung (24) um 90 Winkelgrad versetzt dazu minimal sind.

7. Gelenkinnenteil (1) nach Patentanspruch 6, wobei ein Verhältnis des maximalen Betrags des Übergangsradius (25) zu dem minimalen Betrag des Übergangsradius (25) in einem Bereich von 5 bis 10 liegt.

8. Gelenkinnenteil (1) nach einem der vorhergehenden Patentansprüche, wobei die erste Mantellinie (10) jedes Zapfens (5) in einem Bereich zwischen dem Kontaktpunkt (52) und der Nabe (3) einen Abstand (27) von der Längsachse (7) des Zapfens (5) aufweist, der zumindest dem Inkugel-Radius (19) entspricht.

9. Rollenkörper (28) eines Tripode-Gleichlaufgelenkes (2) mit einem Zentrum (61) sowie einer Außenumfangsfläche (38) und einer konvex geformten Innenumfangsfläche (29), die rotationssymmetrisch um eine Mittelachse (30) ausgebildet sind, wobei eine Mittelebene (31) vorliegt, die eine Mittelachse (30) des Rollenkörpers (28) erfasst und eine Verlaufslinie (33) der konvexen Innenumfangsfläche (29) definiert, wobei die Verlaufslinie (25) eine Verlaufslinienradius (23) ausbildet, dessen Betrag, in einem Zentralbereich (26) um eine Zentralebene (22), die durch das Zentrum (61) und senkrecht zur Mittelebene (31) angeordnet ist, maximal ist und der Betrag des Verlaufslinienradius (23) in einem angrenzenden Bereich (62)
kleiner ist, **dadurch gekennzeichnet, dass** sich die Verlaufslinie (33) außerhalb des konvexen Abschnitts mit einem konkaven Abschnitt fortsetzt.

10. Rollenkörper (28) nach Patentanspruch 9, wobei ein Verhältnis des maximalen Betrags des Verlaufslinienradius (23) zu dem kleineren Betrag des Verlaufslinienradius (23) mindestens 2 beträgt.

11. Rollenkörper (28) nach Patentanspruch 10, wobei das Verhältnis in einem Bereich von 3 bis 6 liegt.

12. Rollenkörper (28) nach einem der Patentansprüche 9 bis 11, wobei der Zentralbereich (26) einen dritten Winkelbereich (41) umfasst, der sich ausgehend vom Zentrum (61) und über die Zentralebene (22) hinaus beidseitig über minimal 1 Winkelgrad und maximal 6 Winkelgrad erstreckt.

13. Tripode-Gleichlaufgelenk (2), zumindest umfassend:
- ein Gelenkinnenteil (1) nach einem der vorhergehenden Patentansprüche 1 bis 8,
- an jedem Zapfen (5) einen drehbar gelagerten Rollenkörper (28) **mit ei**nem Zentrum (61) sowie einer Außenumfangsfläche (38) und einer konvex geformten Innenumfangsfläche (29), die rotationssymmetrisch um eine Mittelachse (30) ausgebildet sind, wobei eine Mittelebene (31) vorliegt, die eine Mittelachse (30) des Rollenkörpers (28) erfasst und eine Verlaufslinie (33) der konvexen Innenumfangsfläche (29) definiert, wobei die Verlaufslinie (25) eine Verlaufslinienradius (23) ausbildet, dessen Betrag, in einem Zentralbereich (26) um eine Zentralebene (22), die durch das Zentrum (61) und senkrecht zur Mittelebene (31) angeordnet ist, maximal ist und der Betrag des Verlaufslinienradius (23) in einem angrenzenden Bereich (62) kleiner ist; oder an jedem Zapfen (5) einen drehbar gelagerten Rollenkörper (28) nach einem der Patentansprüche 9 bis 12, sowie
- ein Gelenkaußenteil (36) mit axial verlaufenden Ausnehmungen (37) zur Führung je eines Rollenkörpers (28),
wobei gegenüberliegende Bereiche der zweiten Mantellinien (15) jedes Zapfens (5), die im Betrieb in Kontakt mit den konvexen Innenumfangsflächen (29) der Rollenkörper (28) sind, jeweils einen Kreisabschnitt (40) eines Konturkreises (42) bilden, deren Kreismittelpunkte (43) jeweils in einer Distanz (39) von der Längsachse (7) des Zapfens (5) angeordnet sind, wobei gilt, dass ein Verhältnis der Distanz (39) zu dem Inkugel-Radius (19) einen Betrag von 0,02 bis 0,38 aufweist.

14. Tripode-Gleichlaufgelenk (2) zumindest umfassend:
- ein Gelenkinnenteil (1) gemäß einem der Patentansprüche 1 bis 8,
- an jedem Zapfen (5) einen drehbar gelagerten Rollenkörper (28) **mit ei**nem Zentrum (61) sowie einer Außenumfangsfläche (38) und einer konvex geformten Innenumfangsfläche (29), die rotationssymmetrisch um eine Mittelachse (30) ausgebildet sind, wobei eine Mittelebene (31) vorliegt, die eine Mittelachse (30) des Rollenkörpers (28) erfasst und eine Verlaufslinie (33) der konvexen Innenumfangsfläche (29) definiert, wobei die Verlaufslinie (25) eine Verlaufslinienradius (23) ausbildet, dessen Betrag, in einem Zentralbereich (26) um eine Zentralebene (22), die durch das Zentrum (61) und senkrecht zur Mittelebene (31) angeordnet ist, maximal ist und der Betrag des Verlaufslinienradius (23) in einem angrenzenden Bereich (62) kleiner ist; oder an jedem Zapfen (5) einen drehbar gelagerten Rollenkörper (28) nach einem der Patentansprüche 9 bis 12, sowie
- ein Gelenkaußenteil (36) mit axial verlaufenden Ausnehmungen (37) zur Führung je eines Rollenkörpers (28),
wobei die Ausnehmungen (37) ein Paar axial verlaufende Führungsflächen (44) aufweisen, an denen sich die Rollenkörper (28) in einer Umfangsrichtung (24) abstützen,
wobei mindestens eine Abstützfläche (45) zwischen dem Paar Führungsflächen (44) angeordnet ist, die eine Kippbewegung (46) der Rollenkörper (28) um eine Kippachse (47) beschränkt, wobei die Kippachse (47) der Rollenkörper (28) durch die Schnittlinie der Zentralebene (25) des Rollenkörpers (28) mit der parallel zur Gelenkachse (56) des Gelenkaußenteils (36) verlaufenden Mittenebene (66) der Führungsflächen (44) gebildet ist.

15. Tripode-Gleichlaufgelenk (2) nach Patentanspruch 14, wobei zwei Abstützflächen (45) vorgesehen sind, die jeweils benachbart zu den Führungsflächen (44) angeordnet sind.

16. Tripode-Gleichlaufgelenk (2) nach Patentanspruch 14 oder 15, wobei die mindestens eine Abstützfläche (45) so angeordnet ist, dass die Rollenkörper (28) um einen Kippwinkelbereich (48) von maximal 10 Winkelgrad um die Kippachse (47) herum kippbar sind.

## Claims

1. Inner joint part (1) of a tripod constant velocity joint (2), comprising a hub (3) having a rotation axis (4) and three projections (5), which outwardly extend from the hub (3) in a radial direction (6), and have a transition region (58), which adjoins the hub (3), and a bearing region (59), wherein the following applies:
- each projection (5) has a longitudinal axis (7) and in the bearing region (59) a crowned circumferential face (9);
- the inner joint part (1) has a first plane (8) which comprises all longitudinal axes (7) of the projections (5) and is defined so as to be perpendicular to the rotation axis (4);
**characterized in that**
- the crowned circumferential face (9) of each projection (5) forms a first surface line (10) which runs in the first plane (8), wherein at a height (11) along the longitudinal axis (7), at which a maximum diameter (12) of the projection (5) is present, an inner sphere (13) having an inner sphere radius (19) is predefined, the midpoint (14) of said inner sphere (13) lying on the longitudinal axis (7) at the point of the height (11), and said inner sphere (13) contacting the opposite contact points (52) of the first surface line (10);
- the first surface line (10) of each projection (5) runs at least in first angular ranges (20) which in each case are adjacent to the respective contact point (52) and which are outside the inner sphere (13), wherein each first angular range (20) emanates from the midpoint (14) of the inner sphere (13) and in each case extends to at maximum 20 angular degrees to both sides of the respective contact point (52);
- a second surface line (15) of the crowned circumferential face (9) of each projection (5) is present in a second plane (16), wherein the second plane (16) is disposed so as to be perpendicular to the first plane (8) and contains the longitudinal axis (7) of the respective projection (5); and
- the second surface line (15) touches the inner sphere (13) only at the height (11) of the maximum diameter (12) of the projection (5) in touch points (60), and runs at least in second angular ranges (34) which in each case are adjacent to the respective touch point (60) and which are within the inner sphere (13), wherein each second angular range (34) emanates from the midpoint (14) of the inner sphere (13) and in each case extends to at maximum 35 angular degrees to both sides of the respective touch point (60);
- wherein the first surface line is referred to for defining an inner sphere (13) having an unequivocally determined inner sphere radius (19); wherein the inner sphere (13) which is referred to here for describing the contour of the projection (5) serves in the comparison with a spherical shape of the projection (5) from which it is presently deviated; wherein the maximum diameter (12) in the first plane (8) may deviate from the maximum diameter (12) of the projection (5) in the second plane (16) by a minor dimension, such that a cross section through the projection (5) in a third plane (18) is shaped in a slightly elliptical manner, wherein the third plane (18) is oriented so as to be perpendicular to both the longitudinal axis (7) of the respective projection (5) as well as to the first plane (8).

2. Inner joint part (1) as claimed in claim 1, wherein the first surface line (10) in the bearing region (59) has a first curvature radius (17) which is at maximum at least at the contact point (52).

3. Inner joint part (1) as claimed in claim 2, wherein a ratio of the value of the first curvature radius (17) in the contact point (52) to the value of the inner sphere radius (19) is at least 50.

4. Inner joint part (1) as claimed in claim 3, wherein the ratio is in a range from 100 to 1000.

5. Inner joint part (1) as claimed in one of the preceding claims, wherein the first surface line (10) of each projection (5) at the contact points (52) and in first angular ranges (20) which are in each case adjacent thereto is embodied as a straight line (21), wherein the first angular range (20) emanates from the midpoint (14) of the inner sphere (13) and at least on one side extends so as to be adjacent to the contact point (52) by 2 to 20 angular degrees.

6. Inner joint part (1) as claimed in one of the preceding claims, wherein each projection (5) in the transition region (58) configures a transition radius (25) the value of which in a circumferential direction (24) about the longitudinal axis (7) of the projection (5) is varied, wherein the values of the transition radius (25) in the first plane (8) are at maximum and in the circumferential direction (24) offset thereto by 90 angular degrees are at minimum.

7. Inner joint part (1) as claimed in claim 6, wherein a ratio of the maximum value of the transition radius (25) to the minimum value of the transition radius (25) is in a range from 5 to 10.

8. Inner joint part (1) as claimed in one of the preceding claims, wherein the first surface line (10) of each projection (5) in a region between the contact point (52) and the hub (3) has a spacing (27) from the longitudinal axis (7) of the projection (5) which corresponds to at least the inner sphere radius (19).

9. Roller element (28) of a tripod constant velocity joint (2), having a center (61) and an outer circumferential face (38) and a convex-shaped inner circumferential face (29) which are configured so as to be rotationally symmetrical about a central axis (30), wherein a median plane (31) which includes a central axis (30) of the roller element (28) and defines a profile line (33) of the convex inner circumferential face (29) is present, wherein the profile line (25) configures a profile line radius (23) of which the value is at maximum in a central region (26) about a central plane (22) which is disposed so as to go through the center (61) and to be perpendicular to the median plane (31), and wherein the value of the profile line radius (23) is smaller in an adjacent region (62), **characterized in that** the profile line (33) continues outside this convex portion by way of a concave portion.

10. Roller element (28) as claimed in patent claim 9, wherein a ratio of the maximum value of the profile line radius (23) to the smaller value of the profile line radius (23) is at least 2.

11. Roller element (28) as claimed in patent claim 10, wherein the ratio is in a range from 3 to 6.

12. Roller element (28) as claimed in one of patent claims 9 to 11, wherein the central region (26) comprises a third angular range (41) which emanating from the center (61) extends beyond the central plane (22) to both sides thereof by at minimum 1 angular degree and at maximum 6 angular degrees.

13. A tripod constant velocity joint (2) comprising at least:
- an inner joint part (1) as claimed in one of the preceding claims 1 to 8;
- a rotatably mounted roller element (28) on each projection (5) having a center (61) and an outer circumferential face (38) and a convex-shaped inner circumferential face (29) which are configured so as to be rotationally symmetrical about a central axis (30), wherein a median plane (31) which includes a central axis (30) of the roller element (28) and defines a profile line (33) of the convex inner circumferential face (29) is present, wherein the profile line (25) configures a profile line radius (23) of which the value is at maximum in a central region (26) about a central plane (22) which is disposed so as to go through the center (61) and to be perpendicular to the median plane (31), and wherein the value of the profile line radius (23) is smaller in an adjacent region (62), or a rotatably mounted roller element (28) as claimed in one of claims 9 to 12 on each projection (5); and
- an outer joint part (36) having axially running clearances (37) for guiding in each case one roller element (28);
wherein opposite regions of the second surface line (15) of each projection (5), which during operation are in contact with the convex inner circumferential faces (29) of the roller elements (28), in each case form one segment (40) of a contour circle (42), the circle centers (43) of said segments (40) in each case being disposed at a distance (39) from the longitudinal axis (7) of the projection (5), wherein a ratio of the distance (39) to the inner sphere radius (19) having a value of 0.02 to 0.38 applies.

14. A tripod constant velocity joint (2) comprising at least:
- an inner joint part (1) as claimed in one of the preceding claims 1 to 8;
- a rotatably mounted roller element (28) on each projection (5) having a center (61) and an outer circumferential face (38) and a convex-shaped inner circumferential face (29) which are configured so as to be rotationally symmetrical about a central axis (30), wherein a median plane (31) which includes a central axis (30) of the roller element (28) and defines a profile line (33) of the convex inner circumferential face (29) is present, wherein the profile line (25) configures a profile line radius (23) of which the value is at maximum in a central region (26) about a central plane (22) which is disposed so as to go through the center (61) and to be perpendicular to the median plane (31), and wherein the value of the profile line radius (23) is smaller in an adjacent region (62), or a rotatably mounted roller element (28) as claimed in one of claims 9 to 12 on each projection (5); and
- an outer joint part (36) having axially running clearances (37) for guiding in each case one roller element (28);
wherein the clearances (37) have a pair of axially running guide faces (44) on which the roller elements (28) are supported in a circumferential direction (24),
wherein at least one support face (45) which limits a tilt movement (46) of the roller elements (28) about a tilt axis (47) is disposed between the pair of guide faces (44), and wherein the tilt axis (47) of the roller elements (28) is formed by the intersection line of the central plane (25) of the roller element (28) and the centric plane (66) of the guide faces (44) which runs parallel with the joint axis (56) of the outer joint part (36).

15. Tripod constant velocity joint (2) as claimed in patent claim 14, wherein two support faces (45) which in each case are disposed so as to be adjacent to the guide faces (44) are provided.

16. Tripod constant velocity joint (2) as claimed in patent claim 14 or 15, wherein the at least one support face (45) is disposed such that the roller elements (28) are tiltable about the tilt axis (47) by a tilt angle range (48) of at maximum 10 angular degrees.

## Revendications

1. Elément intérieur de joint (1) d'un joint homocinétique de type tripode (2), comprenant un moyeu (3) avec un axe de rotation (4) et deux tourillons (5) qui s'étendent vers l'extérieur depuis le moyeu (3) dans une direction radiale (6) et présentent une région de transition (58) se raccordant au moyeu (3) ainsi qu'une région de palier (59), dans lequel:
- chaque tourillon (5) présente un axe longitudinal (7) et, dans la région de palier (59), une surface périphérique bombée (9);
- l'élément intérieur de joint (1) présente un premier plan (8) qui comprend tous les axes longitudinaux (7) des tourillons (5) et qui s'étend perpendiculairement à l'axe de rotation (4);
**caractérisé en ce que**
- la surface périphérique bombée (9) de chaque tourillon (5) forme une première génératrice (10) s'étendant dans le premier plan (8), une sphère inscrite (13) ayant un rayon de sphère inscrite (19) étant prédéfinie à une hauteur (11) le long de l'axe longitudinal (7) à laquelle le tourillon (5) présente son plus grand diamètre (12), son centre (14) étant situé sur l'axe longitudinal (7) au niveau de la hauteur (11) et ledit rayon venant en contact avec des points de contacts opposés (52) de la première génératrice (10);
- la première génératrice (10) de chaque tourillon (5) s'étend au moins dans des premières plages angulaires (20) adjacentes au point de contact respectif (52) à l'extérieur de la sphère inscrite (13), chaque première plage angulaire (20) partant du centre (14) de la sphère inscrite (13) et s'étendant à chaque fois sur au maximum 20 degrés angulaires de chaque côté du point de contact respectif (52);
- une deuxième génératrice (15) de la surface périphérique bombée (9) de chaque tourillon (5) est située dans un deuxième plan (16), le deuxième plan (16) étant disposé perpendiculairement au premier plan (8) et contenant l'axe longitudinal (7) du tourillon respectif (5); et
- la deuxième génératrice (15) vient en contact avec la sphère inscrite (13) seulement à la hauteur (11) du plus grand diamètre (12) du tourillon (5) au niveau de points de contact (60) et s'étend au moins dans des deuxièmes plages angulaires (34) à chaque fois adjacentes au point de contact respectif (60) à l'intérieur de la sphère inscrite (13), chaque deuxième plage angulaire (34) partant du centre (14) de la sphère inscrite (13) et s'étendant à chaque fois sur au maximum 35 degrés angulaires de chaque côté du point de contact respectif (60),
- la première génératrice étant utilisée pour la définition de la sphère inscrite (13) avec un rayon de sphère inscrite déterminé (19); la sphère inscrite (13) citée ici pour décrire le contour du tourillon (5) servant à la comparaison avec une forme sphérique du tourillon (5) dont on s'écarte dans le cas présent; le plus grand diamètre (12) dans le premier plan (8) pouvant s'écarter dans une faible mesure du plus grand diamètre (12) du tourillon (5) dans le deuxième plan (16) de telle sorte qu'une section transversale à travers le tourillon (5) dans un troisième plan (18), le troisième plan (18) étant orienté à la fois perpendiculairement à l'axe longitudinal (7) du tourillon respectif (5) et perpendiculairement au premier plan (8), présente une forme légèrement elliptique.

2. Élément intérieur de joint (1) selon la revendication 1, dans lequel la première génératrice (10) présente, dans la région de palier (59), un premier rayon de courbure (17) qui est maximal au moins au niveau du point de contact (52).

3. Élément intérieur de joint (1) selon la revendication 2, dans lequel un rapport de la mesure du premier rayon de courbure (17) au point de contact (52) à la mesure du rayon de la sphère inscrite (19) est d'au moins 50.

4. Élément intérieur de joint (1) selon la revendication 3, dans lequel le rapport est compris dans une plage de 100 à 1000.

5. Élément intérieur de joint (1) selon l'une quelconque des revendications précédentes, dans lequel la première génératrice (10) de chaque tourillon (5) au niveau des points de contact (52) ainsi que dans des premières plages angulaires respectives adjacentes (20) est réalisée sous forme de droite (21), la première plage angulaire (20) partant du centre (14) de la sphère inscrite (13) et s'étendant au moins d'un côté sur 2 à 20 degrés angulaires à côté du point de contact (52).

6. Élément intérieur de joint (1) selon l'une quelconque des revendications précédentes, dans lequel chaque tourillon (5) forme, dans la région de transition (58), un rayon de transition (25) dont la mesure varie dans une direction périphérique (24) autour de l'axe longitudinal (7) du tourillon (5), les mesures du rayon de transition (25) dans le premier plan (8) étant maximales et étant minimales dans la direction périphérique (24) avec un décalage de 90 degrés angulaires par rapport à celui-ci.

7. Élément intérieur de joint (1) selon la revendication 6, dans lequel un rapport de la mesure maximale du rayon de transition (25) à la mesure minimale du rayon de transition (25) est situé dans une plage de 5 à 10.

8. Élément intérieur de joint (1) selon l'une quelconque des revendications précédentes, dans lequel la première génératrice (10) de chaque tourillon (5) présente, dans une région entre le point de contact (52) et le moyeu (3), présente une distance (27) à l'axe longitudinal (7) du tourillon (5) qui correspond au moins au rayon de la sphère inscrite (19).

9. Corps de galet (28) d'un joint homocinétique de type tripode (2) comprenant un centre (61) ainsi qu'une surface périphérique extérieure (38) et une surface périphérique intérieure (29) de forme convexe, qui sont réalisées avec une symétrie de révolution autour d'un axe médian (30), avec un plan médian (31), lequel comprend un axe médian (30) du corps de galet (28) et définit une ligne d'allure (33) de la surface périphérique intérieure convexe (29), la ligne d'allure (25) formant un rayon de ligne d'allure (23) dont la mesure est maximale dans une région centrale (26) autour d'un plan central (22) qui passe par le centre (61) et est perpendiculaire au plan médian (31), et la mesure du rayon de ligne d'allure (23) étant inférieure dans une région adjacente (62), **caractérisé en ce que** la ligne d'allure (33) se prolonge à l'extérieur de la portion convexe par une portion concave.

10. Corps de galet (28) selon la revendication 9, dans lequel un rapport de la mesure maximale du rayon de ligne d'allure (23) à la mesure inférieure du rayon de lignes d'allure (23) vaut au moins 2.

11. Corps de galet (28) selon la revendication 10, dans lequel le rapport est compris dans une plage de 3 à 6.

12. Corps de galet (28) selon l'une quelconque des revendications 9 à 11, dans lequel la région centrale (26) comprend une troisième plage angulaire (41) qui s'étend à partir du centre (61) et au-delà du plan central (22) des deux côtés sur au minimum 1 degré angulaire et au maximum 6 degrés angulaires.

13. Joint homocinétique de type tripode (2), comprenant au moins :
- un élément intérieur de joint (1) selon l'une quelconque des revendications précédentes 1 à 8,
- au niveau de chaque tourillon (5), un corps de galet (28) supporté à rotation, avec un centre (61) ainsi qu'une surface périphérique extérieure (38) et une surface périphérique intérieure de forme convexe (29) qui sont réalisées avec une symétrie de révolution autour d'un axe médian (30), avec un plan médian (31), lequel comprend un axe médian (30) du corps de galet (28) et définit une ligne d'allure (33) de la surface périphérique intérieure convexe (29), la ligne d'allure (25) formant un rayon de ligne d'allure (23) dont la mesure est maximale dans une région centrale (26) autour d'un plan central (22) qui passe par le centre (61) et est perpendiculaire au plan médian (31) et la mesure du rayon de ligne d'allure (23) étant inférieure dans une région adjacente (62); ou, au niveau de chaque tourillon (5), un corps de galet supporté à rotation (28) selon l'une quelconque des revendications 9 à 12, et
- un élément extérieur de joint (36) avec des évidements s'étendant axialement (37) pour guider chacun un corps de galet (28),
des régions opposées des deuxièmes génératrices (15) de chaque tourillon (5), qui, pendant le fonctionnement, sont en contact avec les surfaces périphériques intérieures convexes (29) des corps de galet (28), formant à chaque fois une section de cercle (40) d'un cercle de contour (42) dont les centres de cercle (43) sont à chaque fois disposés à une distance (39) de l'axe longitudinal (7) du tourillon (5), étant entendu qu'un rapport de la distance (39) au rayon de la sphère inscrite (19) est compris entre 0,02 et 0,38.

14. Joint homocinétique de type tripode (2) comprenant au moins :
- un élément intérieur de joint (1) selon l'une quelconque des revendications 1 à 8,
- au niveau de chaque tourillon (5), un corps de galet supporté à rotation (28) avec un centre (61) ainsi qu'une surface périphérique extérieure (38) et une surface périphérique intérieure de forme convexe (29), qui sont réalisées avec une symétrie de révolution autour d'un axe médian (30), avec un plan médian (31), lequel comprend un axe médian (30) du corps de galet (28) et définit une ligne d'allure (33) de la surface périphérique intérieure convexe (29), la ligne d'allure (25) formant un rayon de ligne d'allure (23) dont la mesure est maximale dans une région centrale (26) autour d'un plan central (22) qui passe par le centre (61) et est perpendiculaire au plan médian (31), et la valeur absolue du rayon de ligne d'allure (23) étant inférieure dans une région adjacente (62); ou au niveau de chaque tourillon (5), un corps de galet (28) supporté à rotation selon l'une quelconque des revendications 9 à 12, et
- un élément extérieur de joint (36) avec des évidements s'étendant axialement (37) pour le guidage d'un corps de galet respectif (28),
les évidements (37) présentant une paire de surfaces de guidage s'étendant axialement (44) sur lesquelles s'appuient les corps de galet (28) dans une direction périphérique (24),
au moins une surface de support (45) étant disposée entre la paire de surfaces de guidage (44), laquelle limite un mouvement de basculement (46) des corps de galet (28) autour d'un axe de basculement (47), l'axe de basculement (47) des corps de galet (28) étant formé par la ligne d'intersection du plan central (25) du corps de galet (28) avec le plan médian (66) des surfaces de guidage (44) s'étendant parallèlement à l'axe de joint (56) de l'élément extérieur de joint (36).

15. Joint homocinétique de type tripode (2) selon la revendication 14, dans lequel des surfaces de support (45) sont prévues, lesquelles sont disposées à chaque fois à côté des surfaces de guidage (44).

16. Joint homocinétique de type tripode (2) selon la revendication 14 ou 15, dans lequel l'au moins une surface de support (45) est disposée de telle sorte que les corps de galet (28) puissent basculer autour d'une plage angulaire de basculement (48) de 10 degrés angulaires au maximum autour de l'axe de basculement (47).
